(19) Europäisches Patentamt
European Patent Office
Office européen des brevets

(11) **EP 4 704 462 A1**

(12) **EUROPEAN PATENT APPLICATION**

(43) Date of publication:
**04.03.2026 Bulletin 2026/10**

(21) Application number: 25199612.0

(22) Date of filing: **02.09.2025**

(51) International Patent Classification (IPC):
**H04W 28/24** $^{(2009.01)}$    **H04W 28/02** $^{(2009.01)}$
**H04W 28/22** $^{(2009.01)}$

(52) Cooperative Patent Classification (CPC):
**H04W 28/24; H04W 28/0268; H04W 28/22**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **03.09.2024 FI 20246086**

(71) Applicant: **Nokia Solutions and Networks Oy 02610 Espoo (FI)**

(72) Inventors:
• **KUMAR, Dileep**
  **02230 Espoo (FI)**
• **TAYYAB, Muhammad**
  **90630 Oulu (FI)**

(74) Representative: **Nokia EPO representatives**
  **Nokia Technologies Oy**
  **Karakaari 7**
  **02610 Espoo (FI)**

(54) **DATA RATE BACKOFF**

(57)    Disclosed is a method comprising determining, by an apparatus, one or more data rate backoff values for reducing a data rate limit of a radio link between the apparatus and a user equipment to be less than a maximum achievable data rate of the radio link, while fulfilling one or more quality of service requirements of the user equipment; and transmitting, by the apparatus, to the user equipment, a message indicating the one or more data rate backoff values.

| 801 | Determine one or more data rate backoff values |
|---|---|
| 802 | Transmit message indicating the one or more data rate backoff values |

FIG. 8

EP 4 704 462 A1

**Description**

FIELD

The following example embodiments relate to wireless communication.

BACKGROUND

Network energy savings (NES) refer to the reduction of power consumption in network operations through efficient technologies and/or practices.

SUMMARY

The scope of protection sought for various example embodiments is set out by the claims. The example embodiments and features, if any, described in this specification that do not fall under the scope of the claims are to be interpreted as examples useful for understanding various embodiments.

According to a first aspect, there is provided an apparatus comprising: means for determining one or more data rate backoff values for reducing a data rate limit of a radio link between the apparatus and a user equipment to be less than a maximum achievable data rate of the radio link, while fulfilling one or more quality of service requirements of the user equipment; and means for transmitting, to the user equipment, a message indicating the one or more data rate backoff values.

According to a second aspect, there is provided the apparatus of the first aspect, wherein the means for determining the one or more data rate backoff values are configured to determine the one or more data rate backoff values based on a goal of maximizing network energy savings by reducing the data rate limit, subject to fulfilling the one or more quality of service requirements of the user equipment.

According to a third aspect, there is provided the apparatus of the first or second aspect, further comprising: means for transmitting, to the user equipment, configuration information associated with a set of data rate backoff values, wherein the one or more data rate backoff values are part of the set of data rate backoff values.

According to a fourth aspect, there is provided the apparatus of the third aspect, wherein the configuration information associated with the set of data rate backoff values indicates to perform at least one of: configuring a precoding matrix indicator different from a precoding matrix indicator configured for the maximum achievable data rate of the radio link, or configuring a modulation coding scheme index different from a modulation coding scheme index configured for the maximum achievable data rate of the radio link.

According to a fifth aspect, there is provided the apparatus of any of the first to fourth aspects, wherein the means for determining the one or more data rate backoff values are configured to determine the one or more data rate backoff values based on at least one of: a discontinuous transmission cycle frequency of the user equipment, a discontinuous reception cycle frequency of the user equipment, a class of the user equipment, or a category of the user equipment.

According to a sixth aspect, there is provided the apparatus of any of the first to fifth aspects, further comprising: means for receiving, from the user equipment, a response to the message, wherein the response indicates an acknowledgement of the one or more data rate backoff values indicated in the message; means for determining, based on the response, a set of minimum network resources sufficient for fulfilling the one or more quality of service requirements of the user equipment with the one or more data rate backoff values; and means for communicating with the user equipment over the radio link based on the set of minimum network resources.

According to a seventh aspect, there is provided the apparatus of the sixth aspect, further comprising: means for muting a subset of antenna elements of the apparatus based on the determination of the set of minimum network resources; and means for boosting a power level of one or more remaining active antenna elements of the apparatus for fulfilling the one or more quality of service requirements of the user equipment.

According to an eighth aspect, there is provided the apparatus of any of the first to fifth aspects, further comprising: means for receiving, from the user equipment, a response to the message, wherein the response indicates a negative acknowledgement of the one or more data rate backoff values indicated in the message; and means for communicating with the user equipment over the radio link with the maximum achievable data rate, based on receiving the response indicating the negative acknowledgement.

According to a ninth aspect, there is provided the apparatus of any of the first to fifth aspects, further comprising: means for receiving, from the user equipment, a response to the message, wherein the response indicates a negative acknowledgement of the one or more data rate backoff values indicated in the message; means for determining an updated data rate backoff value for increasing the data rate limit closer to the maximum achievable data rate, based on receiving the response indicating the negative acknowledgement; and means for transmitting, to the user equipment, a further message indicating the updated data rate backoff value.

According to a tenth aspect, there is provided the apparatus of any of the first to fifth aspects, wherein the one or more data rate backoff values indicated in the message comprise a plurality of data rate backoff values, wherein the apparatus further comprises: means for receiving, from the user equipment, a response to the message, wherein the response indicates a prioritized data rate backoff value from the plurality of data rate backoff values; means for determining, based on the response, a set of minimum network resources sufficient for fulfilling the one or more quality of service requirements of the user equipment with the prioritized data rate backoff value; and means for communicating with the user equipment over the radio link based on the set of minimum network resources.

According to an eleventh aspect, there is provided the apparatus of any of the first to tenth aspects, wherein the one or more quality of service requirements comprise at least one of: a block error rate requirement, a bit rate requirement, a transmission delay requirement, a throughput requirement, or a service availability requirement.

According to a twelfth aspect, there is provided an apparatus comprising: means for receiving, from a network node, a message indicating one or more data rate backoff values for reducing a data rate limit of a radio link between the network node and the apparatus to be less than a maximum achievable data rate of the radio link, while fulfilling one or more quality of service requirements of the apparatus; and means for adjusting power consumption of the apparatus based on one data rate backoff value of the one or more data rate backoff values.

According to a thirteenth aspect, there is provided the apparatus of the twelfth aspect, wherein the adjustment of the power consumption comprises at least one of: adjusting flip-flop cycles associated with a sampling rate of data received over the radio link, deactivating one or more antenna elements of the apparatus, or reducing a transmit power associated with transmitting data over the radio link.

According to a fourteenth aspect, there is provided the apparatus of the twelfth or thirteenth aspect, further comprising: means for receiving, from the network node, configuration information associated with a set of data rate backoff values, wherein the one or more data rate backoff values are part of the set of data rate backoff values; means for determining a subset of the configuration information corresponding to the one data rate backoff value of the one or more data rate backoff values; and means for applying the subset of the configuration information corresponding to the one data rate backoff value of the one or more data rate backoff values.

According to a fifteenth aspect, there is provided the apparatus of the fourteenth aspect, wherein applying the subset of the configuration information comprises: configuring a precoding matrix indicator corresponding to the one data rate backoff value of the one or more data rate backoff values, wherein the precoding matrix indicator is different from a precoding matrix indicator corresponding to the maximum achievable data rate of the radio link, or configuring a modulation coding scheme index corresponding to the one data rate backoff value of the one or more data rate backoff values, wherein the modulation coding scheme index is different from a modulation coding scheme index corresponding to the maximum achievable data rate of the radio link.

According to a sixteenth aspect, there is provided the apparatus of any of the twelfth to fifteenth aspects, further comprising: means for transmitting, to the network node, a response to the message, wherein the response indicates an acknowledgement of the one or more data rate backoff values indicated in the message; and means for communicating with the network node over the radio link with a data rate indicated by the one data rate backoff value of the one or more data rate backoff values.

According to a seventeenth aspect, there is provided the apparatus of any of the twelfth to fifteenth aspects, further comprising: means for transmitting, to the network node, a response to the message, wherein the response indicates a negative acknowledgement of the one or more data rate backoff values indicated in the message; and means for communicating with the network node over the radio link with the maximum achievable data rate, based on transmitting the message indicating the negative acknowledgement.

According to an eighteenth aspect, there is provided the apparatus of any of the twelfth to fifteenth aspects, wherein the one or more data rate backoff values indicated in the message comprise a plurality of data rate backoff values, wherein the apparatus further comprises: means for determining a prioritized data rate backoff value from the plurality of data rate backoff values, wherein the determination of the prioritized data rate backoff value is based on at least one of: a mobility status of the apparatus, a battery status of the apparatus, an energy status of the apparatus, or a present or expected energy harvesting rate of the apparatus, wherein the means for adjusting the power consumption are configured to adjust the power consumption based on the prioritized data rate backoff value; means for transmitting, to the network node, a response to the message, wherein the response indicates the prioritized data rate backoff value; and means for communicating with the network node over the radio link with a data rate indicated by the prioritized data rate backoff value.

According to a nineteenth aspect, there is provided the apparatus of the eighteenth aspect, wherein the prioritized data rate backoff value comprises a highest data rate backoff value from the plurality of data rate backoff values, based on the mobility status indicating that a handover is expected to be performed.

According to a twentieth aspect, there is provided a method comprising: determining, by an apparatus, one or more data rate backoff values for reducing a data rate limit of a radio link between the apparatus and a user equipment to be less than a maximum achievable data rate of the radio link, while fulfilling one or more quality of service requirements of the user equipment; and transmitting, by the apparatus, to the user equipment, a message indicating the one or more data rate backoff values.

According to a twenty-first aspect, there is provided a method comprising: receiving, by an apparatus, from a network node, a message indicating one or more data rate backoff values for reducing a data rate limit of a radio link between the network node and the apparatus to be less than a maximum achievable data rate of the radio link, while fulfilling one or more quality of service requirements of the apparatus; and adjusting, by the apparatus, power consumption of the apparatus based on one data rate backoff value of the one or more data rate backoff values.

According to a twenty-second aspect, there is provided a computer program comprising instructions which, when executed by an apparatus, cause the apparatus to perform at least the following: determining one or more data rate backoff values for reducing a data rate limit of a radio link between the apparatus and a user equipment to be less than a maximum achievable data rate of the radio link, while fulfilling one or more quality of service requirements of the user equipment; and transmitting to the user equipment, a message indicating the one or more data rate backoff values.

According to a twenty-third aspect, there is provided a computer program comprising instructions which, when executed by an apparatus, cause the apparatus to perform at least the following: receiving, from a network node, a message indicating one or more data rate backoff values for reducing a data rate limit of a radio link between the network node and the apparatus to be less than a maximum achievable data rate of the radio link, while fulfilling one or more quality of service requirements of the apparatus; and adjusting power consumption of the apparatus based on one data rate backoff value of the one or more data rate backoff values.

According to a twenty-fourth aspect, there is provided a system comprising at least a network node and a user equipment, wherein the network node comprises: means for determining one or more data rate backoff values for reducing a data rate limit of a radio link between the network node and the user equipment to be less than a maximum achievable data rate of the radio link, while fulfilling one or more quality of service requirements of the user equipment; and means for transmitting, to the user equipment, a message indicating the one or more data rate backoff values; wherein the user equipment comprises: means for receiving, from the network node, the message indicating the one or more data rate backoff values; and means for adjusting power consumption of the user equipment based on one data rate backoff value of the one or more data rate backoff values.

According to a twenty-fifth aspect, there is provided a system comprising at least a network node and a user equipment, wherein the network node is configured to: determine one or more data rate backoff values for reducing a data rate limit of a radio link between the network node and the user equipment to be less than a maximum achievable data rate of the radio link, while fulfilling one or more quality of service requirements of the user equipment; and transmit, to the user equipment, a message indicating the one or more data rate backoff values; wherein the user equipment is configured to: receive, from the network node, the message indicating the one or more data rate backoff values; and adjust power consumption of the user equipment based on one data rate backoff value of the one or more data rate backoff values.

According to a twenty-sixth aspect, there is provided a method comprising performing at least one of a first process or a second process, wherein the first process comprises at least: determining, by a network node, one or more data rate backoff values for reducing a data rate limit of a radio link between the network node and a user equipment to be less than a maximum achievable data rate of the radio link, while fulfilling one or more quality of service requirements of the user equipment; and transmitting, by the network node, to the user equipment, a message indicating the one or more data rate backoff values; wherein the second process comprises at least: receiving, by the user equipment, from the network node, the message indicating the one or more data rate backoff values for reducing the data rate limit of the radio link between the network node and the user equipment to be less than the maximum achievable data rate of the radio link, while fulfilling the one or more quality of service requirements of the user equipment; and adjusting, by the user equipment, power consumption of the user equipment based on one data rate backoff value of the one or more data rate backoff values.

According to a twenty-seventh aspect, there is provided a non-transitory computer readable medium comprising at least one of a first set of program instructions or a second set of program instructions, wherein the first set of program instructions, when executed by a network node, cause the network node to perform at least the following: determining one or more data rate backoff values for reducing a data rate limit of a radio link between the network node and a user equipment to be less than a maximum achievable data rate of the radio link, while fulfilling one or more quality of service requirements of the user equipment; and transmitting, to the user equipment, a message indicating the one or more data rate backoff values; wherein the second set of program instructions, when executed by the user equipment, cause the user equipment to perform at least the following: receiving, from the network node, the message indicating the one or more data rate backoff values for reducing the data rate limit of the radio link between the network node and the user equipment to be less than the maximum achievable data rate of the radio link, while fulfilling the one or more quality of service requirements of the user equipment; and adjusting power consumption of the user equipment based on one data rate backoff value of the one or more data rate backoff values.

According to a twenty-eighth aspect, there is provided a non-transitory computer readable medium comprising program instructions which, when executed by an apparatus, cause the apparatus to perform at least the following: determining one or more data rate backoff values for reducing a data rate limit of a radio link between the apparatus and a user equipment to be less than a maximum achievable data rate of the radio link, while fulfilling one or more quality of service requirements of the user equipment; and transmitting to the user equipment, a message indicating the one or more data rate backoff values.

According to a twenty-ninth aspect, there is provided a non-transitory computer readable medium comprising program instructions which, when executed by an apparatus, cause the apparatus to perform at least the following: receiving, from a network node, a message indicating one or more data rate backoff values for reducing a data rate limit of a radio link between the network node and the apparatus to be less than a maximum achievable data rate of the radio link, while fulfilling one or more quality of service requirements of the apparatus; and adjusting power consumption of the apparatus based on one data rate backoff value of the one or more data rate backoff values.

According to a thirtieth aspect, there is provided a computer readable medium comprising program instructions which, when executed by an apparatus, cause the apparatus to perform at least the following: determining one or more data rate backoff values for reducing a data rate limit of a radio link between the apparatus and a user equipment to be less than a maximum achievable data rate of the radio link, while fulfilling one or more quality of service requirements of the user equipment; and transmitting to the user equipment, a message indicating the one or more data rate backoff values.

According to a thirty-first aspect, there is provided a computer readable medium comprising program instructions which, when executed by an apparatus, cause the apparatus to perform at least the following: receiving, from a network node, a message indicating one or more data rate backoff values for reducing a data rate limit of a radio link between the network node and the apparatus to be less than a maximum achievable data rate of the radio link, while fulfilling one or more quality of service requirements of the apparatus; and adjusting power consumption of the apparatus based on one data rate backoff value of the one or more data rate backoff values.

According to a thirty-second aspect, there is provided an apparatus comprising at least one processor, and at least one memory storing instructions that, when executed by the at least one processor, cause the apparatus at least to: determine one or more data rate backoff values for reducing a data rate limit of a radio link between the apparatus and a user equipment to be less than a maximum achievable data rate of the radio link, while fulfilling one or more quality of service requirements of the user equipment; and transmit, to the user equipment, a message indicating the one or more data rate backoff values.

According to a thirty-third aspect, there is provided an apparatus comprising at least one processor, and at least one memory storing instructions that, when executed by the at least one processor, cause the apparatus at least to: receive, from a network node, a message indicating one or more data rate backoff values for reducing a data rate limit of a radio link between the network node and the apparatus to be less than a maximum achievable data rate of the radio link, while fulfilling one or more quality of service requirements of the apparatus; and adjust power consumption of the apparatus based on one data rate backoff value of the one or more data rate backoff values.

BRIEF DESCRIPTION OF THE DRAWINGS

In the following, various example embodiments will be described in greater detail with reference to the accompanying drawings, in which

FIG. 1 illustrates an example of a wireless communication network;
FIG. 2 illustrates a signal flow diagram;
FIG. 3 illustrates a signal flow diagram;
FIG. 4 illustrates a signal flow diagram;
FIG. 5 illustrates a signal flow diagram;
FIG. 6 illustrates a flow chart;
FIG. 7 illustrates a flow chart;
FIG. 8 illustrates a flow chart;
FIG. 9 illustrates a flow chart;
FIG. 10 illustrates a block diagram;
FIG. 11 illustrates a flow chart;
FIG. 12 illustrates an example embodiment of antenna adaptation;
FIG. 13 illustrates simulation results;
FIG. 14 illustrates an example of an apparatus; and
FIG. 15 illustrates an example of an apparatus.

DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments within the scope of the claims. Furthermore, the words "comprising" and "including" should be understood as not limiting the described embodiments to consist of only those features that have been mentioned, and such embodiments may also contain features that have not been specifically mentioned. Reference numbers, in the description and/or in the claims, serve to illustrate the embodiments with reference to the drawings, without limiting the embodiments to these examples only.

Some example embodiments described herein may be implemented in a wireless communication network comprising a radio access network based on one or more of the following radio access technologies (RATs): global system for mobile communications (GSM) or any other second generation (2G) radio access technology, universal mobile telecommunication system (UMTS, 3G) based on basic wideband-code division multiple access (W-CDMA), high-speed packet access (HSPA), long term evolution (LTE), LTE-Advanced, fourth generation (4G), fifth generation (5G), 5G new radio (NR), 5G-Advanced (i.e., 3GPP NR Rel-18 and beyond), or sixth generation (6G). Some examples of radio access networks include the universal mobile telecommunications system (UMTS) radio access network (UTRAN), the evolved universal terrestrial radio access network (E-UTRA), or the next generation radio access network (NG-RAN). The wireless communication network may further comprise a core network, and some example embodiments may also be applied to network functions of the core network.

It should be noted that the embodiments are not restricted to the wireless communication network given as an example, but a person skilled in the art may also apply the solution to other wireless communication networks or systems provided with necessary properties. For example, some example embodiments may also be applied to a communication system based on IEEE 802.11 specifications, or a communication system based on IEEE 802.15 specifications. IEEE is an abbreviation for the Institute of Electrical and Electronics Engineers.

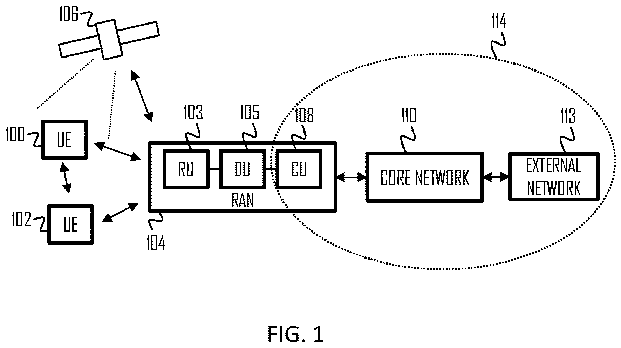

FIG. 1 depicts an example of a simplified wireless communication network showing some physical and logical entities. The connections shown in FIG. 1 may be physical connections or logical connections. It is apparent to a person skilled in the art that the wireless communication network may also comprise other physical and logical entities than those shown in FIG. 1.

The example embodiments described herein are not, however, restricted to the wireless communication network given as an example but a person skilled in the art may apply the example embodiments described herein to other wireless communication networks provided with necessary properties.

The example wireless communication network shown in FIG. 1 includes a radio access network (RAN) and a core network 110.

FIG. 1 shows user equipment (UE) 100, 102 configured to be in a wireless connection on one or more communication channels in a radio cell with an access node 104 of a radio access network.

The access node 104 may comprise a computing device configured to control the radio resources of the access node 104 and to be in a wireless connection with one or more UEs 100, 102. The access node 104 may also be referred to as a base station, a base transceiver station (BTS), an access point, a transmission and reception point (TRP), a cell site, a network node, a radio access network node, or a RAN node.

The access node 104 may be, for example, an evolved NodeB (abbreviated as eNB or eNodeB), or a next generation evolved NodeB (abbreviated as ng-eNB), or a next generation NodeB (abbreviated as gNB or gNodeB), providing the radio cell. The access node 104 may include or be coupled to transceivers. From the transceivers of the access node 104, a connection may be provided to an antenna unit that establishes a bidirectional radio link to one or more UEs 100, 102. The antenna unit may comprise an antenna or antenna element, or a plurality of antennas or antenna elements.

The wireless connection (e.g., radio link) from a UE 100, 102 to the access node 104 may be called uplink (UL) or reverse link, and the wireless connection (e.g., radio link) from the access node 104 to the UE 100, 102 may be called downlink (DL) or forward link. A UE 100 may also communicate directly with another UE 102, and vice versa, via a wireless connection generally referred to as a sidelink (SL). It should be appreciated that the access node 104 or its functionalities may be implemented by using any node, host, server, access point or other entity suitable for providing such functionalities.

The radio access network may comprise more than one access node 104, in which case the access nodes may also be configured to communicate with one another over wired or wireless links. These links between access nodes may be used for sending and/or receiving control plane signaling and also for routing data from one access node to another access node.

The access node 104 may further be connected to a core network (CN) 110. The core network 110 may comprise an evolved packet core (EPC) network and/or a 5th generation core network (5GC). The EPC may comprise network entities, such as a serving gateway (S-GW for routing and forwarding data packets), a packet data network gateway (P-GW) for providing connectivity of UEs to external packet data networks, and/or a mobility management entity (MME). The 5GC may comprise one or more network functions, such as at least one of: a user plane function (UPF), an access and mobility management function (AMF), a location management function (LMF), and/or a session management function (SMF).

The core network 110 may also be able to communicate with one or more external networks 113, such as a public switched telephone network or the Internet, or utilize services provided by them. For example, in 5G wireless communication networks, the UPF of the core network 110 may be configured to communicate with an external data network via an N6 interface. In LTE wireless communication networks, the P-GW of the core network 110 may be configured to communicate with an external data network.

It should also be understood that the distribution of functions between core network operations and access node operations may differ in future wireless communication networks compared to that of the LTE or 5G, or even be non-existent.

The illustrated UE 100, 102 is one type of an apparatus to which resources on the air interface may be allocated and assigned. The UE 100, 102 may also be called a wireless communication device, a subscriber unit, a mobile station, a remote terminal, an access terminal, a user terminal, a terminal device, or a user device, just to mention but a few names. The UE 100, 102 may be a computing device operating with or without a subscriber identification module (SIM), including, but not limited to, the following types of computing devices: a mobile phone, a smartphone, a personal digital assistant (PDA), a handset, a computing device comprising a wireless modem (e.g., an alarm or measurement device, etc.), a laptop computer, a desktop computer, a tablet, a game console, a notebook, a multimedia device, a reduced capability (RedCap) device, a wearable device (e.g., a watch, earphones or eyeglasses) with radio parts, a sensor comprising a wireless modem, or a computing device comprising a wireless modem integrated in a vehicle.

It should be appreciated that the UE 100, 102 may also be a nearly exclusive uplink-only device, of which an example may be a camera or video camera loading images or video clips to a network. The UE 100, 102 may also be a device having capability to operate in an Internet of Things (IoT) network, which is a scenario in which objects may be provided with the ability to transfer data over a network without requiring human-to-human or human-to-computer interaction.

The wireless communication network may also be able to support the usage of cloud services. For example, at least part of core network operations may be carried out as a cloud service (this is depicted in FIG. 1 by "cloud" 114). The UE 100, 102 may also utilize the cloud 114. In some applications, the computation for a given UE may be carried out in the cloud 114 or in another UE.

The wireless communication network may also comprise a central control entity, such as a network management system (NMS), or the like. The NMS is a centralized suite of software and hardware used to monitor, control, and administer the network infrastructure. The NMS is responsible for a wide range of tasks such as fault management, configuration management, security management, performance management, and accounting management. The NMS enables network operators to efficiently manage and optimize network resources, ensuring that the network delivers high performance, reliability, and security.

5G enables using multiple-input and multiple-output (MIMO) antennas in the access node 104 and/or the UE 100, 102, many more base stations or access nodes than an LTE network (a so-called small cell concept), including macro sites operating in cooperation with smaller stations and employing a variety of radio technologies depending on service needs, use cases and/or spectrum available. 5G wireless communication networks may support a wide range of use cases and related applications including video streaming, augmented reality, different ways of data sharing and various forms of machine-type applications, such as (massive) machine-type communications (mMTC), including vehicular safety, different sensors and real-time control.

In 5G wireless communication networks, access nodes and/or UEs may have multiple radio interfaces, such as below 6 gigahertz (GHz), centimeter wave (cmWave) and millimeter wave (mmWave), and also being integrable with legacy radio access technologies, such as LTE. Integration with LTE may be implemented, for example, as a system, where macro coverage may be provided by LTE, and 5G radio interface access may come from small cells by aggregation to LTE. In other words, a 5G wireless communication network may support both inter-RAT operability (such as interoperability between LTE and 5G) and inter-RI operability (inter-radio interface operability, such as between below 6GHz, cmWave, and mmWave).

5G wireless communication networks may also apply network slicing, in which multiple independent and dedicated virtual sub-networks (network instances) may be created within the same physical infrastructure to run services that have different requirements on latency, reliability, throughput and mobility.

In one embodiment, an access node 104 may comprise: a radio unit (RU) 103 comprising a radio transceiver (TRX), i.e., a transmitter (Tx) and a receiver (Rx); one or more distributed units (DUs) 105 that may be used for the so-called Layer 1 (L1) processing and real-time Layer 2 (L2) processing; and a central unit (CU) 108 (also known as a centralized unit) that may be used for non-real-time L2 and Layer 3 (L3) processing. The CU 108 may be connected to the one or more DUs 105 for example via an F1 interface. Such an embodiment of the access node 104 may enable the centralization of CUs relative to the cell sites and DUs, whereas DUs may be more distributed and may even remain at cell sites. The CU and DU together may also be referred to as baseband or a baseband unit (BBU). The CU and DU may also be comprised in a radio access point (RAP).

The CU 108 may be a logical node hosting radio resource control (RRC), service data adaptation protocol (SDAP) and/or packet data convergence protocol (PDCP), of the NR protocol stack for an access node 104. The CU 108 may comprise a control plane (CU-CP), which may be a logical node hosting the RRC and the control plane part of the PDCP protocol of the NR protocol stack for the access node 104. The CU 108 may further comprise a user plane (CU-UP), which may be a logical node hosting the user plane part of the PDCP protocol and the SDAP protocol of the CU for the access node 104.

The DU 105 may be a logical node hosting radio link control (RLC), medium access control (MAC) and/or physical (PHY) layers of the NR protocol stack for the access node 104. The operations of the DU 105 may be at least partly controlled by the CU 108. It should also be understood that the distribution of functions between the DU 105 and the CU 108 may vary depending on the implementation.

Cloud computing systems may also be used to provide the CU 108 and/or DU 105. A CU provided by a cloud computing system may be referred to as a virtualized CU (vCU). In addition to the vCU, there may also be a virtualized DU (vDU) provided by a cloud computing system. Furthermore, there may also be a combination, where the DU may be implemented on so-called bare metal solutions, for example application-specific integrated circuit (ASIC) or customer-specific standard product (CSSP) system-on-a-chip (SoC).

Edge cloud may be brought into the radio access network by utilizing network function virtualization (NFV) and software defined networking (SDN). Using edge cloud may mean access node operations to be carried out, at least partly, in a computing system operationally coupled to a remote radio head (RRH) or a radio unit (RU) 103 of an access node 104. It is also possible that access node operations may be performed on a distributed computing system or a cloud computing system located at the access node 104. Application of cloud RAN architecture enables RAN real-time functions being carried out at the radio access network (e.g., in a DU 105), and non-real-time functions being carried out in a centralized manner (e.g., in a CU 108).

5G (or new radio, NR) wireless communication networks may support multiple hierarchies, where multi-access edge computing (MEC) servers may be placed between the core network 110 and the access node 104. It should be appreciated that MEC may be applied in LTE wireless communication networks as well.

A 5G wireless communication network ("5G network") may also comprise a non-terrestrial communication network, such as a satellite communication network, to enhance or complement the coverage of the 5G radio access network. For example, satellite communication may support the transfer of data between the 5G radio access network and the core network 110, enabling more extensive network coverage. Possible use cases may include: providing service continuity for machine-to-machine (M2M) or Internet of Things (IoT) devices or for passengers on board of vehicles, or ensuring service availability for critical communications, and future railway, maritime, or aeronautical communications. Satellite communication may utilize geostationary earth orbit (GEO) satellite systems, or low earth orbit (LEO) satellite systems, such as mega-constellations (i.e., systems in which hundreds of (nano)satellites are deployed). Alternatively, the satellites may be an airborne devices, such as an unmanned aerial vehicle (UAV), or a high-altitude platform system (HAPS). A given satellite 106 may provide communication services on Earth via one or more satellite beams. The one or more satellite beams create one or more cells over a given service area that may be bounded by the field of view of the satellite 106.

It is obvious for a person skilled in the art that the access node 104 depicted in FIG. 1 is just an example of a part of a radio access network, and in practice the radio access network may comprise a plurality of access nodes 104, the UEs 100, 102 may have access to a plurality of radio cells, and the radio access network may also comprise other apparatuses, such as physical layer relay access nodes or other entities. At least one of the access nodes may be a Home eNodeB or a Home gNodeB. A Home gNodeB or a Home eNodeB is a type of access node that may be used to provide indoor coverage inside a home, office, or other indoor environment.

Additionally, in a geographical area of a radio access network, a plurality of different kinds of radio cells as well as a plurality of radio cells may be provided. Radio cells may be macro cells (or umbrella cells) which may be large cells having a diameter of up to tens of kilometers, or smaller cells such as micro-, femto- or picocells. The access node(s) 104 of FIG. 1 may provide any kind of these cells. A cellular radio network may be implemented as a multilayer access networks including several kinds of radio cells. In multilayer access networks, one access node may provide one kind of a radio cell or radio cells, and thus a plurality of access nodes may be needed to provide such a multilayer access network.

For fulfilling the need for improving performance of radio access networks, the concept of "plug-and-play" access nodes may be introduced. A radio access network, which may be able to use "plug-and-play" access nodes, may include, in addition to Home eNodeBs or Home gNodeBs, a Home Node B gateway (HNB-GW) (not shown in FIG. 1). An HNB-GW, which may be installed within an operator's radio access network, may aggregate traffic from a large number of Home eNodeBs or Home gNodeBs back to a core network 110 of the operator.

6G wireless communication networks are expected to adopt flexible decentralized and/or distributed computing systems and architecture and ubiquitous computing, with local spectrum licensing, spectrum sharing, infrastructure sharing, and intelligent automated management underpinned by mobile edge computing, artificial intelligence, short-packet communication and blockchain technologies. Key features of 6G may include intelligent connected management and control functions, programmability, integrated sensing and communication, reduction of energy footprint, trustworthy infrastructure, scalability and affordability. In addition to these, 6G is also targeting new use cases covering the integration of localization and sensing capabilities into system definition to unifying user experience across physical and digital worlds.

Network energy efficiency is relevant for environmental sustainability to reduce environmental impact (e.g., greenhouse gas emissions). New cellular systems are becoming pervasive across industries and geographical areas, handling more advanced services and applications requiring very high data rates (e.g., extended reality, etc.). Networks are becoming denser, using more antennas, larger system bandwidth, and more frequency bands. The environmental impact of 6G and beyond needs to stay under control, and there is a need to develop solutions to improve network energy savings.

The power consumption of a network node (e.g., a gNB or a TRP) may comprise two parts: a dynamic part which is consumed when data transmission or reception is ongoing, and a static part which is consumed all the time to maintain the necessary operation, even when the data transmission or reception is not ongoing. In 6G and beyond cellular systems, the network node is expected to be equipped with massive antenna elements (e.g., 1024 antenna elements or more) and large system bandwidth (e.g., 400 megahertz or more), which increases the power consumption significantly compared to previous generations. This constitutes the main bottleneck (e.g., due to higher bandwidth, active components in radio chain, etc.) in achieving the energy-efficient network for future cellular systems.

Thus, there is a challenge in how to exploit the UE assistance information (e.g., quality of service, data rate, etc.) to achieve more efficient and pre-emptive adaptation of the transmission and/or reception in the network energy saving techniques in time, frequency, spatial, and/or power domains.

Furthermore, there is a challenge in how to optimize the achievable network energy saving gains, while ensuring better balance between the contradicting metrics, (e.g., network energy savings and UE performance), and thus proactively avoid having a large impact on the UE performance.

Therefore, there is a need to proactively optimize the energy efficiency by exploring the UE assistance information and leveraging network energy saving techniques across time, frequency, spatial, and/or power domains, such that both the UE quality of service (QoS) performance and network energy consumption are balanced, thus ensuring a seamless transition to future 6G and beyond cellular networks.

QoS refers to mechanisms that are used for managing network traffic and ensuring the required performance of applications. QoS helps to prioritize certain types of data traffic, ensuring that high-priority applications like voice over internet protocol (VoIP), video conferencing, and online gaming receive the necessary bandwidth and low latency to function effectively. Key aspects of QoS may include, for example: bandwidth management, delay (latency) control, jitter reduction, and packet loss minimization.

Some example embodiments may enable proactive optimization of network and UE power consumption to improve energy efficiency, while ensuring that the required UE QoS performance is met. This may be enabled by exploiting the support or feedback from the UE, and adapting the transmission and/or reception in one or more energy saving techniques in time, frequency, spatial, and/or power domains.

Assuming the tolerable QoS backoff level (i.e., reducing the data rate limit of by a certain percentage in some specific scenarios) with the UE, the network node may pre-emptively determine and optimize the minimum required network resources (e.g., $\{s_a, s_f, s_p, s_t\}$) in order to achieve a better balance between the UE's QoS requirements and energy savings at the network node.

$s_a$ refers to the fraction of active transceiver units (antennas), and it may be a value larger than 0 and less than or equal to 1.

$s_f$ refers to the resource usage ratio in the frequency domain, and it may be a value larger than 0 and less than or equal to 1.

$s_p$ refers to the ratio of power spectral density during transmission, and it may be a value larger than 0 and less than or equal to 1.

$s_t$ refers to the fraction of active transmit or receive states, and it may be a value larger than 0 and less than or equal to 1.

The example embodiments described below may improve network energy savings, while ensuring the UE's desired QoS and traffic requirements. The example embodiments may also improve UE energy savings, while ensuring the desired QoS and dynamic traffic requirements. Furthermore, some example embodiments may provide a dynamic adjustment to the required network resources (e.g., $\{s_a, s_f, s_p, s_t\}$) to achieve a better and more favorable balance between performance and network energy efficiency.

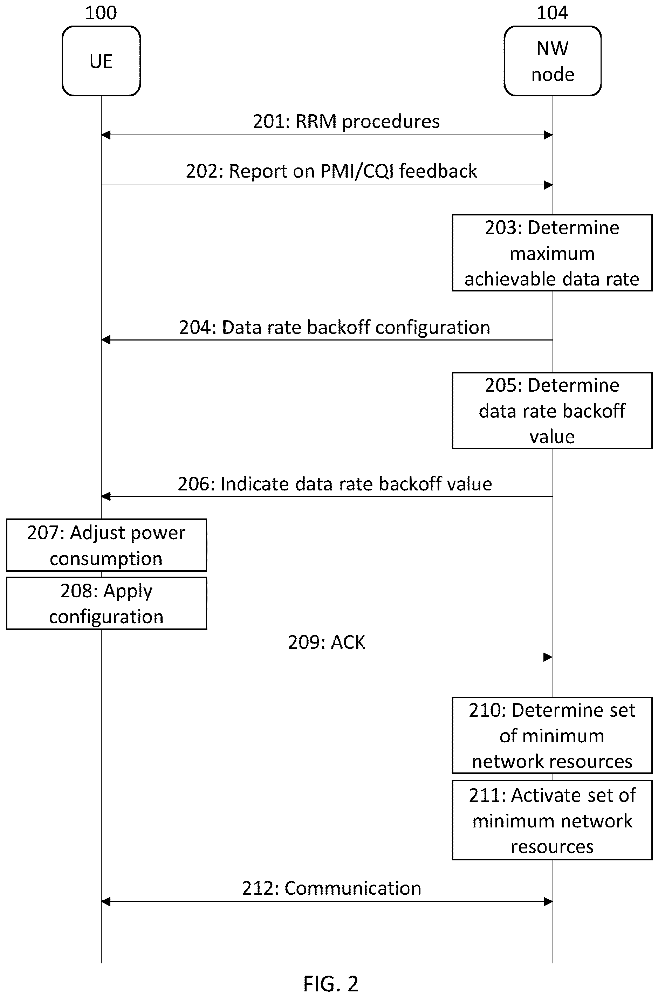

FIG. 2 illustrates a signal flow diagram according to an example embodiment.

Referring to FIG. 2, at 201, radio resource management (RRM) procedures are performed between a UE 100 and a network node 104. The network node 104 may comprise, for example, a gNB or a central unit (CU) 108. The CU 108 may communicate with the UE 100 via a distributed unit (DU) 105.

The RRM procedures may be performed to configure and control various parameters, such as: transmit power, user allocation, beamforming, data rates, handover criteria, modulation schemes, and/or error coding schemes.

The UE 100 may also perform channel state information (CSI) measurements on one or more channel state information reference signals (CSI-RS) transmitted from the network node 104. The CSI measurements may be used for adapting transmissions to the current channel conditions.

At 202, the UE 100 transmits a report (e.g., reportQuantity cri-RI-LI-PMI-CQI) to the network node 104. The network node 104 receives the report. This report may comprise assistance information, such as at least one of: a channel state information reference signal resource indicator (CRI), which helps in identifying the best downlink beam; a rank indicator indicating the number of layers for MIMO transmission; a layer indicator (LI) specifying the number of transmission layers; a precoding matrix indicator (PMI), which helps in selecting the best precoding matrix for transmission; and/or a channel quality indicator (CQI), which provides information about the quality of the communication channel (or radio link) between the UE 100 and the network node 104.

At 203, based on the report, the network node 104 determines a maximum achievable data rate (denoted as $C_{max}$) of the radio link between the network node 104 and the UE 100. In other words, the network node 104 exploits the above assistance information (e.g., on the channel conditions) reported by the UE 100 to determine the maximum achievable data rate of the radio link.

At 204, the network node 104 transmits, to the UE 100, configuration information associated with a set of data rate backoff values. The UE 100 receives the configuration information. This configuration information may also be referred to as a NES-aware rate backoff configuration. The configuration information may be provided once for each RRC session and remain fixed until RRC release. For example, the configuration information may be transmitted via radio resource control (RRC) signaling (e.g., in an RRC reconfiguration message) or radio link control (RLC) signaling. Alternatively, a new signaling specific for the NES mode may be used.

For example, the set of data rate backoff values may indicate a certain percentage or portion of the maximum achievable data rate to be reduced, taking into account the tolerable QoS backoff level. The configuration information may comprise, for example, a fixed look-up table between the set of data rate backoff values and other configuration parameters. For example, each data rate backoff value in the look-up table may correspond to a certain precoding matrix indicator (PMI) and/or modulation coding scheme (MCS) index (or to a certain decrease in PMI and/or a certain change in the MCS index).

In other words, the configuration information associated with the set of data rate backoff values may indicate the UE 100 to perform at least one of: configuring a precoding matrix indicator different from a precoding matrix indicator configured for the maximum achievable data rate of the radio link, or configuring a modulation coding scheme index different from a modulation coding scheme index configured for the maximum achievable data rate of the radio link.

At 205, the network node 104 determines one or more data rate backoff values for reducing a data rate limit of the radio link to be less than a maximum achievable data rate of the radio link, while fulfilling one or more quality of service requirements of the UE 100. The data rate limit may refer to a maximum data rate limit that is set lower than the maximum achievable data rate limit of the radio link.

In other words, the network node 104 may calculate the possible network power consumptions and determine a data rate backoff value $\delta_{cap}$ (i.e., reducing the data rate limit by a certain percentage, such that $C \geq C_{max} - \delta_{cap}$, where the parameter C denotes the UE's minimum QoS requirements) by which the network energy savings may be maximized, while ensuring the UE's minimum QoS requirements.

Thus, the one or more data rate backoff values may be determined based on a goal of maximizing network energy savings (NES) by reducing the data rate limit, subject to fulfilling the one or more quality of service requirements of the UE 100. The one or more data rate backoff values may be part of the set of data rate backoff values (from 204).

The one or more quality of service requirements may comprise, for example, at least one of: a block error rate (BLER) requirement (e.g., a maximum block error rate), a bit rate requirement (e.g., a minimum bit rate), a transmission delay requirement (e.g., a maximum transmission delay), a throughput requirement (e.g., a minimum throughput), or a service availability requirement (e.g., a minimum service availability).

For example, the one or more data rate backoff values may be determined based on at least one of: a discontinuous transmission cycle frequency of the UE 100, a discontinuous reception cycle frequency of the UE 100, a class of the UE 100, or a category of the UE 100. The determination of the one or more data rate backoff values may also be based on the maximum achievable data rate of the radio link.

Discontinuous transmission (DTX) is a technique used in wireless communication systems to conserve bandwidth and reduce power consumption by temporarily stopping the transmission of signals, for example during periods of silence or inactivity. The DTX cycle frequency refers to how often the device (e.g., the UE 100 or the network node 104) checks for activity and decides whether to transmit or remain silent.

Discontinuous reception (DRX) is another power-saving mechanism used in wireless communication systems. DRX allows a wireless communication device to periodically turn off its receiver and enter a low-power state, when there is no data to receive, thus conserving battery life. The DRX cycle frequency refers to how often the device (e.g., the UE 100 or the network node 104) wakes up to check for incoming data. The DRX cycle comprises two main periods: the on-duration (the device's receiver is active and listens for incoming data), and the off-duration (the device's receiver is turned off to save power).

The class of the UE 100 (UE class) refers to the general performance level of the UE 100, including aspects like power class, which indicates the maximum transmit power of the UE 100.

The category of the UE 100 (UE category) defines the specific performance capabilities of the UE 100, such as maximum data rates, MIMO (Multiple Input Multiple Output) support, and other technical parameters. Each category may be associated with certain performance metrics, including at least one of: maximum downlink and uplink data rates, number of supported MIMO layers, and/or carrier aggregation capabilities. Some examples of UE categories may include: autonomous vehicles, 5G or 6G UEs, industrial IoT devices (e.g., sensors), RedCap devices, and ambient IoT devices (e.g., energy-harvesting devices).

As an example, the network node 104 may determine a data rate backoff value aligned with the UE's DTX and/or DRX cycle, such that the data rate backoff value may be smaller for a more frequent DRX cycle, and larger for a less frequent DRX cycle.

As another example, the network node 104 may determine a data rate backoff value considering the UE's class and category information. For example, devices such as industrial wireless RedCap sensors may have stringent latency requirements (e.g., 5 - 10 ms), and thus a smaller data rate backoff value may be applied for such devices so that the data will be received more quickly. On the other hand, devices such as video surveillance RedCap devices may have more lenient latency requirements (e.g., approximately 500 ms), and thus a higher data rate backoff value may be applied for such devices so that more energy can be saved.

Table 1 below presents some non-limiting examples of possible data rate backoff values with respect to the UE's DTX or DRX cycle. It should be noted that the numerical values in Table 1 are just examples, and these may scale differently for different system configurations and UE QoS requirements. However, the underlying relationship between the data rate backoff and energy saving still holds. Thus, by exploiting the potential assistance information and pre-configured look-up table, the UE 100 may optimize the resources for UE power savings.

Table 1.

| UE category | DTX/DRX cycle | QoS requirement | Data rate backoff | Reason | Suggestion to UE |
|---|---|---|---|---|---|
| Autonomous vehicle | 5 ms | Very high | 0%-2% | Critical QoS for real-time communication; minimal back-off to ensure low latency for safety-critical data | Implement ultra-low latency configurations for real-time vehicle communication |
| 5G/6G UE | 10 ms | High | 2%-5% | Strict QoS demands a minimal back-off to maintain high data rates and low latency | Continue with the current configuration for optimal performance |
| 5G/6G UE | 320 ms | Medium | 10%-20% | Moderate QoS requirements allow for a slightly higher back-off, optimizing power consumption | Consider evaluating power-efficient, e.g., UE antenna, power adaptation to enhance energy savings |
| Industrial IoT device | 512 ms | Medium | 30%-40% | Moderate QoS requirements for industrial sensors; a balance between latency and power efficiency | Consider optimizing DRX settings based on the specific industrial use case |
| RedCap device | 640 ms | Low | 20%-40% | Lower priority than 5G/6G devices; increased back-off to accommodate higher-priority traffic | Suggest an extended DRX cycle (e.g., 1280 ms) to balance power and latency. |

(continued)

| UE category | DTX/DRX cycle | QoS requirement | Data rate backoff | Reason | Suggestion to UE |
|---|---|---|---|---|---|
| Ambient IoT device | 10240 ms | Lowest | 50%-6-0% | Highest backoff could be used as the device is low-priority device | DRX could be extended to highest possible value (e.g., 10485.76s) which could bring opportunity to harvest more energy outside DRX on-Duration |

At 206, the network node 104 transmits, to the UE 100, a message indicating the one or more data rate backoff values. The UE 100 receives the message. In the message, the network node 104 may also provide an activation request to the UE 100 for activating the one or more data rate backoff values. For example, the message may be transmitted via RRC signaling (e.g., as an RRC reconfiguration message) or RLC signaling. Alternatively, a new signaling specific for the NES mode may be used.

At 207, the UE 100 adjusts power consumption of the UE 100 based on one data rate backoff value of the one or more data rate backoff values. In other words, the UE 100 may use this information to pre-emptively optimize its own power consumption used for the encoding and/or decoding of data traffic.

The UE 100 may determine and configure one or more parameters for UE energy savings. For example, the adjustment of the power consumption may comprise at least one of: adjusting flip-flop cycles associated with a sampling rate of data received over the radio link, deactivating (turning off) one or more antenna elements of the UE 100, or reducing a transmit power associated with transmitting data over the radio link.

Flip-flop cycles refer to the switching between two stable states of a flip-flop circuit, which can store a single bit of data. These flip-flop cycles may be triggered by control signals, such as clock pulses. Herein adjusting the flip-flop cycles involves synchronizing the timing of digital circuits to accurately process incoming data. This process ensures that the digital system correctly interprets the data received over the radio link by aligning the timing of the flip-flops with the rate at which data is sampled. The sampling rate is the rate at which analog signals are converted to digital data, and it determines how frequently the radio signal is measured and converted into a digital form. If the data rate is lower, then the sampling rate can also be lower.

At 208, the UE 100 determines a subset of the configuration information corresponding to the one data rate backoff value of the one or more data rate backoff values, and the UE 100 applies the subset of the configuration information corresponding to the one data rate backoff value of the one or more data rate backoff values.

If the one or more data rate backoff values comprise only one data rate backoff value, then the UE 100 may determine to use the subset of the configuration information corresponding to this one data rate backoff value. Otherwise, if the one or more data rate backoff values comprise more than one data rate backoff value, then the UE 100 may select one of the data rate backoff values (e.g., the highest or lowest value) and determine to use the subset of configuration information corresponding to the selected data rate backoff value.

For example, applying the subset of the configuration information may comprise: configuring a precoding matrix indicator corresponding to the one data rate backoff value of the one or more data rate backoff values, wherein the precoding matrix indicator is different from a precoding matrix indicator corresponding to the maximum achievable data rate of the radio link; or configuring a modulation coding scheme index corresponding to the one data rate backoff value of the one or more data rate backoff values, wherein the modulation coding scheme index is different from a modulation coding scheme index corresponding to the maximum achievable data rate of the radio link.

As a non-limiting example, at 206, the network node 104 may indicate a 5 % data rate backoff. Based on the configuration information (e.g., look-up table) received at 204, the UE 100 knows that this 5 % data rate backoff corresponds to a certain decrease in MCS and/or a certain change in the PMI index.

At 209, the UE 100 transmits, to the network node 104, a response to the message (of 206), wherein the response indicates an acknowledgement (ACK) of the one or more data rate backoff values indicated in the message. The response may also indicate the data rate backoff value selected by the UE 100 (if a plurality of data rate backoff values were indicated to the UE 100). The network node 104 receives the response. For example, the response may be a message transmitted via RRC or RLC signaling.

At 210, the network node 104 determines, based on the response received from the UE 100, a set of minimum network resources (e.g., $\{s_a, s_f, s_p, s_t\}$) sufficient for fulfilling the one or more quality of service requirements of the UE 100 with the one data rate backoff value of the one or more data rate backoff values. In other words, the network node 104 considers the network energy-saving aspects and then proactively determines and optimizes the minimum required resources to achieve a better balance between the UE's QoS and network energy savings aspects.

For example, the determination of the set of minimum network resources may be modelled as an optimization problem as follows:

$$\min \{s_a, s_f, s_p, s_t\}$$

$$\text{s.t. } C \geq C_{\max} - \delta_{cap}$$

$$\{s_a, s_f, s_p, s_t\} \geq 0$$

That is, the optimization problem involves minimizing the objective function with respect to the variables $\{s_a, s_f, s_p, s_t\}$, subject to the constraints $C \geq C_{\max} - \delta_{cap}$ and $\{s_a, s_f, s_p, s_t\} \geq 0$. These constraints ensure that the solution meets certain conditions while optimizing the objective function.

If the one or more data rate backoff values comprise only one data rate backoff value, then the network node 104 may determine the set of minimum network resources sufficient for this one data rate backoff value. Otherwise, if the one or more data rate backoff values comprise more than one data rate backoff value, then the network node 104 may determine the set of minimum network resources sufficient for the data rate backoff value selected by the UE 100.

At 211, the network node 104 configures or activates the set of minimum network resources to be used for communicating with the UE 100.

In case of a split CU-DU architecture, the CU 108 of the network node 104 may transmit or provide, to the DU 105 of the network node 104, a resource configuration indicating the set of minimum network resources, and the resource configuration may then be activated at the DU 105 for communicating with the UE 100.

For example, the network node 104 may mute (or deactivate) a subset of antenna ports or elements of the network node 104 based on the determination of the set of minimum network resources (e.g., based on the parameter $s_a$ in the set of minimum network resources), and boost a power level of one or more remaining active antenna ports elements of the network node 104 for fulfilling the one or more quality of service requirements of the UE 100. In this way, the reduction in achievable signal-to-interference-plus-noise ratio (SINR) caused by the muting (e.g., due to less beamforming gains) may be compensated by applying the power boost on the remaining active antennas, thus meeting the UE's QoS requirements.

Alternatively, or additionally, the set of minimum network resources may comprise one or more other parameters, such as bandwidth $s_f$, power $s_p$ and/or time $s_t$, that may be configured by the network node 104 to achieve NES gains.

At 212, the network node 104 and the UE 100 communicate with each other over the radio link with a data rate indicated by the one data rate backoff value of the one or more data rate backoff values. For example, the network node 104 may transmit data to the UE 100 in downlink by using the set of minimum network resources, and/or the UE 100 may transmit data to the network node 104 in uplink with the data rate indicated by the one data rate backoff value of the one or more data rate backoff values.

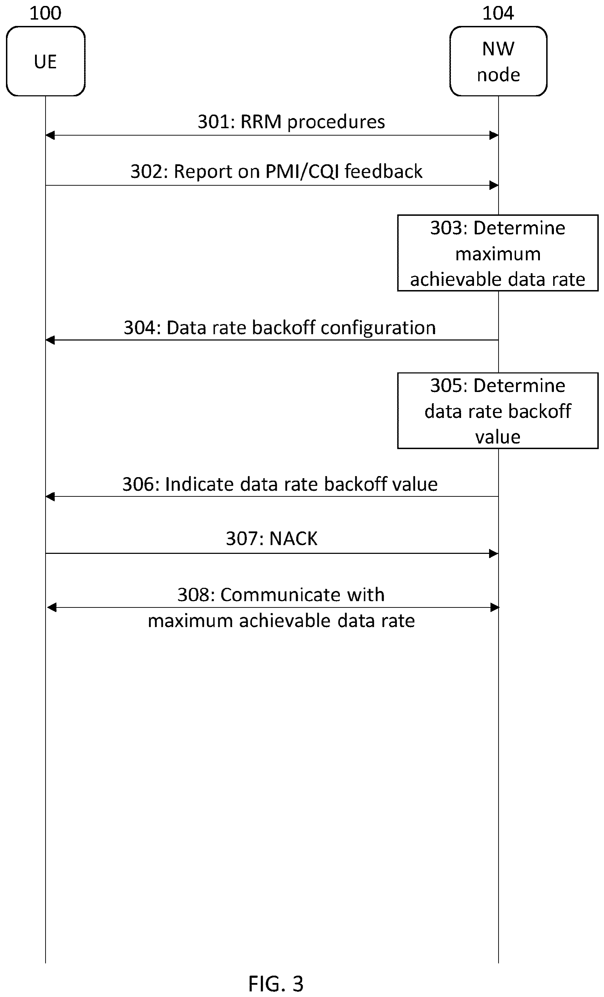

FIG. 3 illustrates a signal flow diagram according to an example embodiment.

Referring to FIG. 3, at 301, radio resource management (RRM) procedures are performed between a UE 100 and a network node 104. The network node 104 may comprise, for example, a gNB or a central unit (CU) 108. The CU 108 may communicate with the UE 100 via a distributed unit (DU) 105.

The RRM procedures may be performed to configure and control various parameters, such as: transmit power, user allocation, beamforming, data rates, handover criteria, modulation schemes, and/or error coding schemes.

The UE 100 may also perform channel state information (CSI) measurements on one or more channel state information reference signals (CSI-RS) transmitted from the network node 104. The CSI measurements may be used for adapting transmissions to the current channel conditions.

At 302, the UE 100 transmits a report (e.g., reportQuantity cri-RI-LI-PMI-CQI) to the network node 104. The network node 104 receives the report. This report may comprise assistance information, such as at least one of: a channel state information reference signal resource indicator (CRI), which helps in identifying the best downlink beam; a rank indicator indicating the number of layers for MIMO transmission; a layer indicator (LI) specifying the number of transmission layers; a precoding matrix indicator (PMI), which helps in selecting the best precoding matrix for transmission; and/or a channel quality indicator (CQI), which provides information about the quality of the communication channel (or radio link) between the UE 100 and the network node 104.

At 303, based on the report, the network node 104 determines a maximum achievable data rate of the radio link between the network node 104 and the UE 100. In other words, the network node 104 exploits the above assistance information (e.g., on the channel conditions) reported by the UE 100 to determine the maximum achievable data rate of the radio link.

At 304, the network node 104 transmits, to the UE 100, configuration information associated with a set of data rate backoff values. The UE 100 receives the configuration information. This configuration information may also be referred to as a NES-aware rate backoff configuration. For example, the configuration information may be transmitted via radio resource control (RRC) signaling (e.g., in an RRC reconfiguration message) or radio link control (RLC) signaling. Alternatively, a new signaling specific for the NES mode may be used.

For example, the set of data rate backoff values may indicate reducing the maximum achievable data rate by a certain percentage or portion, taking into account the tolerable QoS backoff level. The configuration information may comprise, for example, a fixed look-up table between the set of data rate backoff values and other configuration parameters. For example, each data rate backoff value in the look-up table may correspond to a certain PMI and/or MCS index (or to a certain decrease in PMI and/or a certain change in the MCS index).

In other words, the configuration information associated with the set of data rate backoff values may indicate the UE 100 to perform at least one of: configuring a precoding matrix indicator different from a precoding matrix indicator configured for the maximum achievable data rate of the radio link, or configuring a modulation coding scheme index different from a modulation coding scheme index configured for the maximum achievable data rate of the radio link.

At 305, the network node 104 determines one or more data rate backoff values for reducing a data rate limit of the radio link to be less than a maximum achievable data rate of the radio link, while fulfilling one or more quality of service requirements of the UE 100. The data rate limit may refer to a maximum data rate limit that is set lower than the maximum achievable data rate limit of the radio link.

In other words, the network node 104 may calculate the possible network power consumptions and determines a data rate backoff value by which the network energy savings may be maximized, while ensuring the UE's minimum QoS requirements.

Thus, the one or more data rate backoff values may be determined based on a goal of maximizing network energy savings (NES) by reducing the data rate limit, subject to fulfilling the one or more quality of service requirements of the UE 100. The one or more data rate backoff values may be part of the set of data rate backoff values (from 304).

The one or more quality of service requirements may comprise, for example, at least one of: a block error rate (BLER) requirement (e.g., a maximum block error rate), a bit rate requirement (e.g., a minimum bit rate), a transmission delay requirement (e.g., a maximum transmission delay), a throughput requirement (e.g., a minimum throughput), or a service availability requirement (e.g., a minimum service availability).

For example, the one or more data rate backoff values may be determined based on at least one of: a discontinuous transmission cycle frequency of the UE 100, a discontinuous reception cycle frequency of the UE 100, a class of the UE 100, or a category of the UE 100. The determination of the one or more data rate backoff values may also be based on the maximum achievable data rate of the radio link.

At 306, the network node 104 transmits, to the UE 100, a message indicating the one or more data rate backoff values. The UE 100 receives the message. In the message, the network node 104 may also provide an activation request to the UE 100 for activating the one or more data rate backoff values. For example, the message may be transmitted via RRC signaling (e.g., as an RRC reconfiguration message) or RLC signaling. Alternatively, a new signaling specific for the NES mode may be used.

At 307, the UE 100 transmits, to the network node 104, a response to the message (of 306), wherein the response indicates a negative acknowledgement (NACK) of the one or more data rate backoff values indicated in the message. The network node 104 receives the response. For example, the response may be a message transmitted via RRC or RLC signaling.

For example, the UE 100 may transmit the NACK in case the UE does not accept (or is unable to apply) the one or more data rate backoff values suggested by the network node 104 (e.g., to use a higher DRX cycle frequency or lower number of UE receive antennas).

At 308, based on the response indicating the negative acknowledgement, the network node 104 and the UE 100 communicate with each other over the radio link with the maximum achievable data rate of the radio link (i.e., without applying any data rate backoff). For example, the network node 104 may transmit data to the UE 100 in downlink with the maximum achievable data rate, and/or the UE 100 may transmit data to the network node 104 in uplink with the maximum achievable data rate. This may help to avoid any additional delay and ping-pong between the UE 100 and the network node 104.

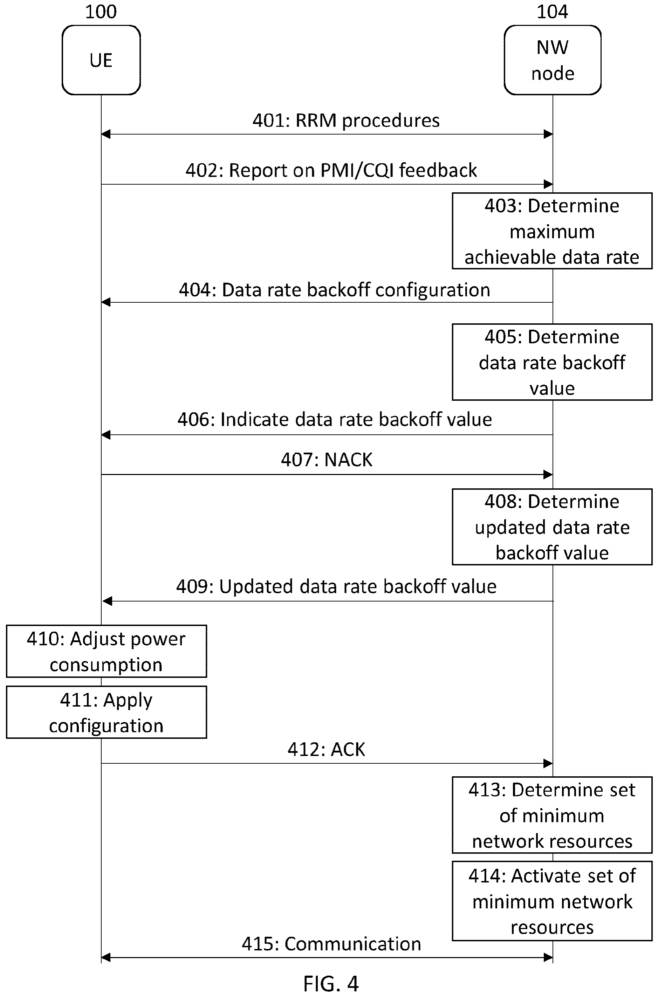

FIG. 4 illustrates a signal flow diagram according to an example embodiment.

Referring to FIG. 4, at 401, radio resource management (RRM) procedures are performed between a UE 100 and a network node 104. The network node 104 may comprise, for example, a gNB or a central unit (CU) 108. The CU 108 may communicate with the UE 100 via a distributed unit (DU) 105.

The RRM procedures may be performed to configure and control various parameters, such as: transmit power, user allocation, beamforming, data rates, handover criteria, modulation schemes, and/or error coding schemes.

The UE 100 may also perform channel state information (CSI) measurements on one or more channel state information reference signals (CSI-RS) transmitted from the network node 104. The CSI measurements may be used for adapting transmissions to the current channel conditions.

At 402, the UE 100 transmits a report (e.g., reportQuantity cri-RI-LI-PMI-CQI) to the network node 104. The network node 104 receives the report. This report may comprise assistance information, such as at least one of: a channel state information reference signal resource indicator (CRI), which helps in identifying the best downlink beam; a rank indicator indicating the number of layers for MIMO transmission; a layer indicator (LI) specifying the number of transmission layers; a precoding matrix indicator (PMI), which helps in selecting the best precoding matrix for transmission; and/or a channel quality indicator (CQI), which provides information about the quality of the communication channel (or radio link) between the UE 100 and the network node 104.

At 403, based on the report, the network node 104 determines a maximum achievable data rate of the radio link between the network node 104 and the UE 100. In other words, the network node 104 exploits the above assistance information (e.g., on the channel conditions) reported by the UE 100 to determine the maximum achievable data rate of the radio link.

At 404, the network node 104 transmits, to the UE 100, configuration information associated with a set of data rate backoff values. The UE 100 receives the configuration information. This configuration information may also be referred to as a NES-aware rate backoff configuration. For example, the configuration information may be transmitted via radio resource control (RRC) signaling (e.g., in an RRC reconfiguration message) or radio link control (RLC) signaling. Alternatively, a new signaling specific for the NES mode may be used.

For example, the set of data rate backoff values may indicate reducing the maximum achievable data rate by a certain percentage or portion, taking into account the tolerable QoS backoff level. The configuration information may comprise, for example, a fixed look-up table between the set of data rate backoff values and other configuration parameters. For example, each data rate backoff value in the look-up table may correspond to a certain PMI and/or MCS index (or to a certain decrease in PMI and/or a certain change in the MCS index).

In other words, the configuration information associated with the set of data rate backoff values may indicate the UE 100 to perform at least one of: configuring a precoding matrix indicator different from a precoding matrix indicator configured for the maximum achievable data rate of the radio link, or configuring a modulation coding scheme index different from a modulation coding scheme index configured for the maximum achievable data rate of the radio link.

At 405, the network node 104 determines one or more data rate backoff values for reducing a data rate limit of the radio link to be less than a maximum achievable data rate of the radio link, while fulfilling one or more quality of service requirements of the UE 100. The data rate limit may refer to a maximum data rate limit that is set lower than the maximum achievable data rate limit of the radio link.

In other words, the network node 104 may calculate the possible network power consumptions and determines a data rate backoff value by which the network energy savings may be maximized, while ensuring the UE's minimum QoS requirements.

Thus, the one or more data rate backoff values may be determined based on a goal of maximizing network energy savings (NES) by reducing the data rate limit, subject to fulfilling the one or more quality of service requirements of the UE 100. The one or more data rate backoff values may be part of the set of data rate backoff values (from 404).

The one or more quality of service requirements may comprise, for example, at least one of: a block error rate (BLER) requirement (e.g., a maximum block error rate), a bit rate requirement (e.g., a minimum bit rate), a transmission delay requirement (e.g., a maximum transmission delay), a throughput requirement (e.g., a minimum throughput), or a service availability requirement (e.g., a minimum service availability).

For example, the one or more data rate backoff values may be determined based on at least one of: a discontinuous transmission cycle frequency of the UE 100, a discontinuous reception cycle frequency of the UE 100, a class of the UE 100, or a category of the UE 100. The determination of the one or more data rate backoff values may also be based on the maximum achievable data rate of the radio link.

At 406, the network node 104 transmits, to the UE 100, a message indicating the one or more data rate backoff values. The UE 100 receives the message. In the message, the network node 104 may also provide an activation request to the UE 100 for activating the one or more data rate backoff values. For example, the message may be transmitted via RRC signaling (e.g., as an RRC reconfiguration message) or RLC signaling. Alternatively, a new signaling specific for the NES mode may be used.

At 407, the UE 100 transmits, to the network node 104, a response to the message (of 406), wherein the response indicates a negative acknowledgement (NACK) of the one or more data rate backoff values indicated in the message. The network node 104 receives the response. For example, the response may be a message transmitted via RRC or RLC signaling.

At 408, based on receiving the response indicating the negative acknowledgement, the network node 104 determines an updated data rate backoff value for increasing the data rate limit closer to the maximum achievable data rate, while fulfilling the one or more quality of service requirements of the UE 100. It should be noted that the data rate limit indicated by the updated data rate backoff value is still lower than the maximum achievable data rate of the radio link.

In other words, if there is no strict delay constraint, the network node 104 may increase the data rate limit after receiving the NACK from the UE 100, and indicate this new backoff value to the UE 100 for some energy savings.

At 409, the network node 104 transmits, to the UE 100, a further message indicating the updated data rate backoff value. The updated data rate backoff value may be part of the set of data rate backoff values from 404. Alternatively, the network node 104 may transmit new configuration information associated with the updated data rate backoff value to the UE 100.

At 410, the UE 100 adjusts power consumption of the UE 100 based on the updated data rate backoff value. In other words, the UE 100 may use this information to pre-emptively optimize its own power consumption used for the encoding and/or decoding of data traffic.

For example, the adjustment of the power consumption may comprise at least one of: adjusting flip-flop cycles associated with a sampling rate of data received over the radio link, deactivating (turning off) one or more antenna elements of the UE 100, or reducing a transmit power associated with transmitting data over the radio link.

At 411, the UE 100 determines a subset of the configuration information (from 404 or from the new configuration information) corresponding to the updated data rate backoff value, and the UE 100 applies the subset of the configuration information corresponding to the updated data rate backoff value.

For example, applying the subset of the configuration information may comprise: configuring a precoding matrix indicator corresponding to the updated data rate backoff value, wherein the precoding matrix indicator is different from a precoding matrix indicator corresponding to the maximum achievable data rate of the radio link; or configuring a modulation coding scheme index corresponding to the updated data rate backoff value, wherein the modulation coding scheme index is different from a modulation coding scheme index corresponding to the maximum achievable data rate of the radio link.

At 412, the UE 100 transmits, to the network node 104, a response to the further message (of 410), wherein the response indicates an acknowledgement (ACK) of the updated data rate backoff value indicated in the further message. The network node 104 receives the response. For example, the response may be a message transmitted via RRC or RLC signaling.

At 413, the network node 104 determines, based on the response received from the UE 100 at 412, a set of minimum network resources (e.g., $\{s_a, s_f, s_p, s_t\}$) sufficient for fulfilling the one or more quality of service requirements of the UE 100 with the updated data rate backoff value. In other words, the network node 104 considers the network energy-saving aspects and then proactively determines and optimizes the minimum required resources to achieve a better balance between the UE's QoS and network energy savings aspects.

At 414, the network node 104 configures or activates the set of minimum network resources to be used for communicating with the UE 100.

In case of a split CU-DU architecture, the CU 108 of the network node 104 may transmit or provide, to the DU 105 of the network node 104, a resource configuration indicating the set of minimum network resources, and the resource configuration may then be activated at the DU 105 for communicating with the UE 100.

For example, the network node 104 may mute (or deactivate) a subset of antenna ports or elements of the network node 104 based on the determination of the set of minimum network resources (e.g., based on the parameter $s_a$ in the set of minimum network resources), and boost a power level of one or more remaining active antenna ports elements of the network node 104 for fulfilling the one or more quality of service requirements of the UE 100. In this way, the reduction in achievable signal-to-interference-plus-noise ratio (SINR) caused by the muting (e.g., due to less beamforming gains) may be compensated by applying the power boost on the remaining active antennas, thus meeting the UE's QoS requirements.

Alternatively, or additionally, the set of minimum network resources may comprise one or more other parameters, such as bandwidth $s_f$, power $s_p$ and/or time $s_t$, that may be configured by the network node 104 to achieve NES gains.

At 415, the network node 104 and the UE 100 communicate with each other over the radio link with a data rate indicated by the updated data rate backoff value. For example, the network node 104 may transmit data to the UE 100 in downlink with the data rate indicated by the updated data rate backoff value by using the set of minimum network resources, and/or the UE 100 may transmit data to the network node 104 in uplink with the data rate indicated by the updated data rate backoff value.

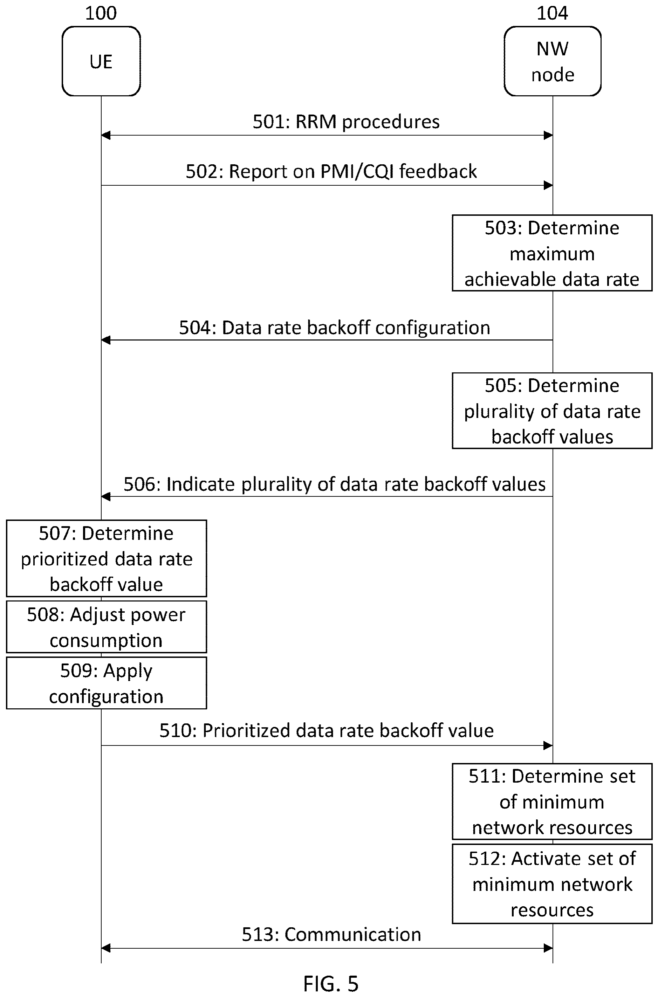

FIG. 5 illustrates a signal flow diagram according to an example embodiment, wherein a plurality of data rate backoff values are determined.

Referring to FIG. 5, at 501, radio resource management (RRM) procedures are performed between a UE 100 and a network node 104. The network node 104 may comprise, for example, a gNB or a central unit (CU) 108. The CU 108 may communicate with the UE 100 via a distributed unit (DU) 105.

The RRM procedures may be performed to configure and control various parameters, such as: transmit power, user allocation, beamforming, data rates, handover criteria, modulation schemes, and/or error coding schemes.

The UE 100 may also perform channel state information (CSI) measurements on one or more channel state information reference signals (CSI-RS) transmitted from the network node 104. The CSI measurements may be used for adapting transmissions to the current channel conditions.

At 502, the UE 100 transmits a report (e.g., reportQuantity cri-RI-LI-PMI-CQI) to the network node 104. The network node 104 receives the report. This report may comprise assistance information, such as at least one of: a channel state information reference signal resource indicator (CRI), which helps in identifying the best downlink beam; a rank indicator indicating the number of layers for MIMO transmission; a layer indicator (LI) specifying the number of transmission layers; a precoding matrix indicator (PMI), which helps in selecting the best precoding matrix for transmission; and/or a channel quality indicator (CQI), which provides information about the quality of the communication channel (or radio link) between the UE 100 and the network node 104.

At 503, based on the report, the network node 104 determines a maximum achievable data rate of the radio link between the network node 104 and the UE 100. In other words, the network node 104 exploits the above assistance information (e.g., on the channel conditions) reported by the UE 100 to determine the maximum achievable data rate of the radio link.

At 504, the network node 104 transmits, to the UE 100, configuration information associated with a set of data rate backoff values. The UE 100 receives the configuration information. This configuration information may also be referred to as a NES-aware rate backoff configuration. For example, the configuration information may be transmitted via radio resource control (RRC) signaling (e.g., in an RRC reconfiguration message) or radio link control (RLC) signaling. Alternatively, a new signaling specific for the NES mode may be used.

For example, the set of data rate backoff values may indicate reducing the maximum achievable data rate by a certain percentage or portion, taking into account the tolerable QoS backoff level. The configuration information may comprise, for example, a fixed look-up table between the set of data rate backoff values and other configuration parameters. For example, each data rate backoff value in the look-up table may correspond to a certain PMI and/or MCS index (or to a certain decrease in PMI and/or a certain change in the MCS index).

In other words, the configuration information associated with the set of data rate backoff values may indicate the UE 100 to perform at least one of: configuring a precoding matrix indicator different from a precoding matrix indicator configured for the maximum achievable data rate of the radio link, or configuring a modulation coding scheme index different from a modulation coding scheme index configured for the maximum achievable data rate of the radio link.

At 505, the network node 104 determines a plurality of data rate backoff values for reducing a data rate limit of the radio link to be less than a maximum achievable data rate of the radio link, while fulfilling one or more quality of service requirements of the UE 100. The data rate limit may refer to a maximum data rate limit that is set lower than the maximum achievable data rate limit of the radio link.

In other words, the network node 104 may calculate the possible network power consumptions and determine a plurality of different data rate backoff values by which the network energy savings may be maximized, while ensuring the UE's minimum QoS requirements.

Thus, the plurality of data rate backoff values may be determined based on a goal of maximizing network energy savings (NES) by reducing the data rate limit, subject to fulfilling the one or more quality of service requirements of the UE 100. The plurality of data rate backoff values may be part of the set of data rate backoff values (from 504).

The one or more quality of service requirements may comprise, for example, at least one of: a block error rate (BLER) requirement (e.g., a maximum block error rate), a bit rate requirement (e.g., a minimum bit rate), a transmission delay requirement (e.g., a maximum transmission delay), a throughput requirement (e.g., a minimum throughput), or a service availability requirement (e.g., a minimum service availability).

For example, the plurality of data rate backoff values may be determined based on at least one of: a discontinuous transmission cycle frequency of the UE 100, a discontinuous reception cycle frequency of the UE 100, a class of the UE 100, or a category of the UE 100. The determination of the plurality of data rate backoff values may also be based on the maximum achievable data rate of the radio link.

At 506, the network node 104 transmits, to the UE 100, a message indicating the plurality of data rate backoff values. The UE 100 receives the message. In the message, the network node 104 may also provide a request to the UE 100 for assisting the network node 104 in the adaptation of network energy saving gains (e.g., requesting the UE 100 to select one of the data rate backoff values). For example, the message may be transmitted via RRC signaling (e.g., as an RRC reconfiguration message) or RLC signaling. Alternatively, a new signaling specific for the NES mode may be used.

At 507, the UE 100 determines a prioritized data rate backoff value from the plurality of data rate backoff values. That is, the UE 100 may rank the plurality of data rate backoff values in a priority order, and then select the value with the highest priority. The determination of the prioritized data rate backoff value may be based on one or more ranking and selection criteria pre-configured at the UE 100.

For example, the determination of the prioritized data rate backoff value may be based on one or more UE-dependent parameters, such as at least one of: a mobility status of the UE 100, a battery status of the UE 100, an energy status of the UE 100, or a present (current) or expected (future) energy harvesting rate of the UE 100.

The mobility status of the UE 100 refers to the current state and behavior of the UE 100 in terms of its movement within the network. The mobility status may include information about whether the UE 100 is stationary, moving slowly, or moving quickly, and it may also indicate if the UE is undergoing or expected to be undergoing a handover between cells or tracking areas.

The battery status of the UE 100 refers to the current condition and performance of the UE's battery. The battery status may include information about at least one of: remaining battery life (e.g., the percentage of battery charge left), battery health (the overall condition of the battery, indicating its capacity to hold a charge compared to its original state), power consumption rate (how quickly the battery is being drained based on current usage), or charging status (whether the battery is currently being charged and at what rate).

The energy status of the UE 100 may refer to the current state of the UE's battery and/or its power consumption level. The energy status may include information about at least one of: the remaining battery life, the rate of energy consumption, and/or any energy-saving modes or mechanisms in use.

Energy harvesting means that the UE 100 captures and converts ambient energy from its environment into electrical energy to power itself. This ambient energy may come from various sources, such as at least one of: solar power, thermal energy, kinetic energy, or radio frequency signals. The energy harvesting rate of the UE 100 refers to the amount of energy that the UE 100 can capture and convert from the ambient source(s) into usable electrical power over a specific time period. For example, the energy harvesting rate may be measured in units like microwatts ($\mu$W) or milliwatts (mW) and indicates how efficiently the UE 100 can sustain its operations using harvested energy.

As an example, the prioritized data rate backoff value may comprise a highest data rate backoff value from the plurality of data rate backoff values, based on the mobility status indicating that a handover is expected to be performed (i.e., the UE 100 will switch to a different cell). During a handover, the UE 100 needs to perform additional tasks such as scanning for new cells, measuring signal quality, and communicating with both the current serving cell and target cells. By conserving energy before and during this process, the UE 100 can ensure that it has sufficient power to complete the handover smoothly and maintain a stable connection.

As another example, if the UE 100 is an energy-harvesting UE, the UE 100 may use the current battery or energy status and current or future energy harvesting rate to decide an optimal data rate backoff value out of the provided options. For example, the UE 100 may prioritize lower data rate back-off values (that provide a smaller reduction of the data rate limit) if the UE 100 has a higher battery energy status and/or higher energy harvesting rate, or prioritize higher data rate back-off values (that provide a larger reduction of the data rate limit) if the UE 100 has a lower battery status and/or lower energy harvesting rate (and thus needs to save energy). For energy-harvesting UEs, it is beneficial to use energy when it is available, and to save energy when it is not available.

At 508, the UE 100 adjusts power consumption of the UE 100 based on the prioritized data rate backoff value. In other words, the UE 100 may use this information to pre-emptively optimize its own power consumption used for the encoding and/or decoding of data traffic.

For example, the adjustment of the power consumption may comprise at least one of: adjusting flip-flop cycles associated with a sampling rate of data received over the radio link, deactivating (turning off) one or more antenna elements of the UE 100, or reducing a transmit power associated with transmitting data over the radio link.

At 509, the UE 100 determines a subset of the configuration information corresponding to the prioritized data rate backoff value, and the UE 100 applies the subset of the configuration information corresponding to the prioritized data rate backoff value.

For example, applying the subset of the configuration information may comprise: configuring a precoding matrix indicator corresponding to the prioritized data rate backoff value, wherein the precoding matrix indicator is different from a precoding matrix indicator corresponding to the maximum achievable data rate of the radio link; or configuring a modulation coding scheme index corresponding to the prioritized data rate backoff value, wherein the modulation coding scheme index is different from a modulation coding scheme index corresponding to the maximum achievable data rate of the radio link.

At 510, the UE 100 transmits, to the network node 104, a response to the message (of 506), wherein the response indicates the prioritized data rate backoff value. Alternatively, the response may indicate one or more data rate backoff values in a priority order. The network node 104 receives the response. For example, the response may be a message transmitted via RRC or RLC signaling.

In case the response indicates more than one data rate backoff value, then the network node 104 may consider network energy-saving aspects and select one of the values (e.g., the largest value providing the highest energy savings).

At 511, the network node 104 determines, based on the response received from the UE 100, a set of minimum network resources (e.g., $\{s_a, s_f, s_p, s_t\}$) sufficient for fulfilling the one or more quality of service requirements of the UE 100 with the prioritized data rate backoff value. In other words, the network node 104 considers the network energy-saving aspects and then proactively determines and optimizes the minimum required resources to achieve a better balance between the UE's QoS and network energy savings aspects.

At 512, the network node 104 configures or activates the set of minimum network resources to be used for communicating with the UE 100.

In case of a split CU-DU architecture, the CU 108 of the network node 104 may transmit or provide, to the DU 105 of the network node 104, a resource configuration indicating the set of minimum network resources, and the resource configuration may then be activated at the DU 105 for communicating with the UE 100.

For example, the network node 104 may mute (or deactivate) a subset of antenna ports or elements of the network node 104 based on the determination of the set of minimum network resources (e.g., based on the parameter $s_a$ in

the set of minimum network resources), and boost a power level of one or more remaining active antenna ports elements of the network node 104 for fulfilling the one or more quality of service requirements of the UE 100. In this way, the reduction in achievable signal-to-interference-plus-noise ratio (SINR) caused by the muting (e.g., due to less beamforming gains) may be compensated by applying the power boost on the remaining active antennas, thus meeting the UE's QoS requirements.

Alternatively, or additionally, the set of minimum network resources may comprise one or more other parameters, such as bandwidth $s_f$, power $s_p$ and/or time $s_t$, that may be configured by the network node 104 to achieve NES gains.

At 513, the network node 104 and the UE 100 communicate with each other over the radio link with a data rate indicated by the prioritized data rate backoff value. For example, the network node 104 may transmit data to the UE 100 in downlink with the data rate indicated by the prioritized data rate backoff value by using the set of minimum network resources, and/or the UE 100 may transmit data to the network node 104 in uplink with the data rate indicated by the prioritized data rate backoff value.

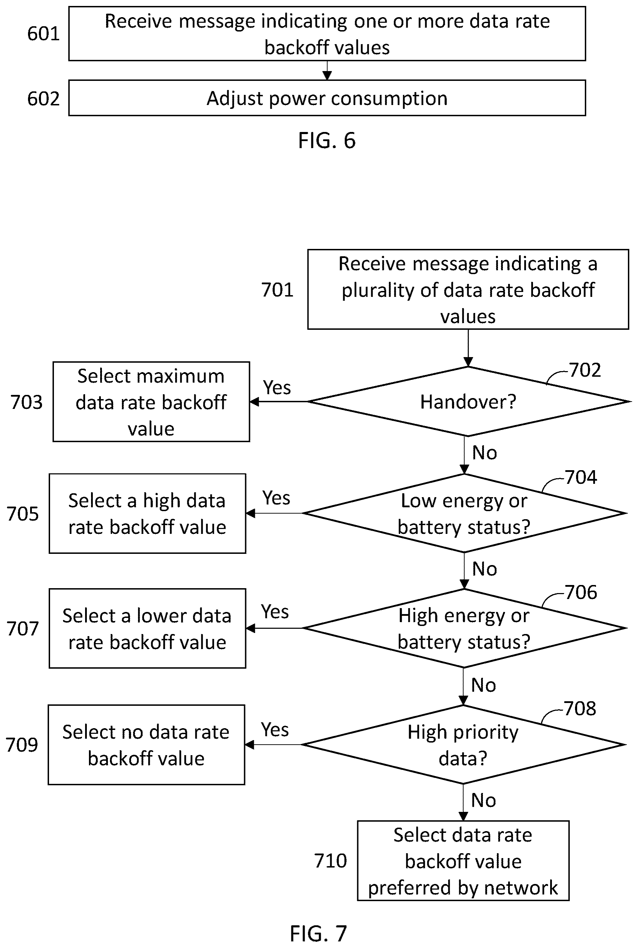

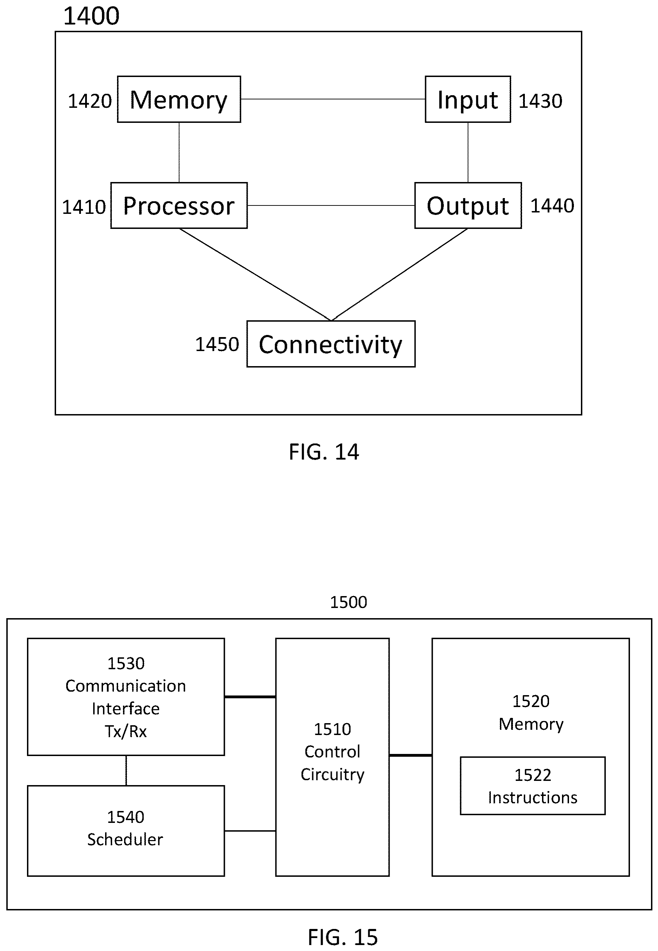

FIG. 6 illustrates a flow chart according to an example embodiment of a method for energy-efficient data rate backoff. The method of FIG. 6 may be performed by an apparatus 1400 depicted in FIG. 14. For example, the apparatus 1400 may be, or comprise, or be comprised in, a user equipment (UE) 100, 102.

Referring to FIG. 6, in block 601, the apparatus 1400 receives, from a network node 104, a message indicating one or more data rate backoff values for reducing a data rate limit of a radio link between the network node 104 and the apparatus 1400 to be less than a maximum achievable data rate of the radio link, while fulfilling one or more quality of service requirements of the apparatus 1400.

For example, the one or more quality of service requirements may comprise at least one of: a block error rate requirement, a bit rate requirement, a transmission delay requirement, a throughput requirement, or a service availability requirement.

In block 602, the apparatus 1400 adjusts power consumption of the apparatus 1400 based on one data rate backoff value of the one or more data rate backoff values.

For example, the adjustment of the power consumption may comprise at least one of: adjusting flip-flop cycles associated with a sampling rate of data received over the radio link, deactivating one or more antenna elements of the apparatus, or reducing a transmit power associated with transmitting data over the radio link.

The apparatus 1400 may receive, from the network node 104, configuration information associated with a set of data rate backoff values, wherein the one or more data rate backoff values are part of the set of data rate backoff values. The apparatus 1400 may determine a subset of the configuration information corresponding to the one data rate backoff value of the one or more data rate backoff values, and apply the subset of the configuration information corresponding to the one or more data rate backoff values.

For example, applying the subset of the configuration information may comprise: configuring a precoding matrix indicator corresponding to the one data rate backoff value of the one or more data rate backoff values, wherein the precoding matrix indicator is different from a precoding matrix indicator corresponding to the maximum achievable data rate of the radio link, or configuring a modulation coding scheme index corresponding to the one data rate backoff value of the one or more data rate backoff values, wherein the modulation coding scheme index is different from a modulation coding scheme index corresponding to the maximum achievable data rate of the radio link.

The apparatus 1400 may transmit, to the network node 104, a response to the message, wherein the response indicates an acknowledgement of the one or more data rate backoff values indicated in the message (or an acknowledgement of at least the one data rate backoff value of the one or more data rate backoff values). The apparatus 1400 may communicate with the network node 104 over the radio link with a data rate indicated by the one data rate backoff value of the one or more data rate backoff values.

The apparatus 1400 may transmit, to the network node 104, a response to the message, wherein the response indicates a negative acknowledgement of the one or more data rate backoff values indicated in the message. The apparatus 1400 may communicate with the network node 104 (e.g., transmit data and/or receive data) over the radio link with the maximum achievable data rate, based on transmitting the message indicating the negative acknowledgement.

In one embodiment, the one or more data rate backoff values indicated in the message may comprise a plurality of data rate backoff values. The apparatus 1400 may determine a prioritized data rate backoff value from the plurality of data rate backoff values, wherein the determination of the prioritized data rate backoff value may be based on at least one of: a mobility status of the apparatus 1400, a battery status of the apparatus 1400, an energy status of the apparatus 1400, or a present or expected energy harvesting rate of the apparatus 1400. The apparatus 1400 may adjust the power consumption based on the prioritized data rate backoff value. The apparatus 1400 may transmit, to the network node 104, a response to the message, wherein the response indicates the prioritized data rate backoff value. The apparatus 1400 may communicate with the network node 104 over the radio link with a data rate indicated by the prioritized data rate backoff value.

As an example, the prioritized data rate backoff value may comprise a highest data rate backoff value from the plurality of data rate backoff values, based on the mobility status indicating that a handover is expected to be performed.

FIG. 7 illustrates a flow chart according to an example embodiment of a method for determining the prioritized data rate backoff value from the plurality of data rate backoff values (e.g., at 507 of FIG.5). The method of FIG. 7 may be performed by an apparatus 1400 depicted in FIG. 14. For example, the apparatus 1400 may be, or comprise, or be comprised in, a user equipment (UE) 100, 102.

It should be noted that the scenarios (or selection criteria) shown in FIG. 7 (e.g., handover, low energy, high energy, etc.) are just used as examples, and some example embodiments may alternatively apply different selection criteria than the ones shown in FIG. 7. Thus, the example embodiments are not limited to the scenarios shown in FIG. 7.

Referring to FIG. 7, in block 701, the apparatus 1400 receives, from a network node 104, a message indicating a plurality of data rate backoff values for reducing a data rate limit of a radio link between the network node 104 and the apparatus 1400 to be less than a maximum achievable data rate of the radio link, while fulfilling one or more quality of service requirements of the apparatus 1400.

In block 702, the apparatus 1400 determines whether a handover (e.g., intra-RAT handover) is expected to be performed.

In block 703, based on determining that a handover is expected to be performed (block 702: yes), the apparatus 1400 determines the prioritized data rate backoff value by selecting a maximum (highest/largest) data rate backoff value from the plurality of data rate backoff values. In other words, if the apparatus 1400 discovers a handover situation, it will choose the maximum data rate backoff value, since the apparatus 1400 needs to measure neighbour cell(s) for a potential handover. In this case, the apparatus 1400 may transmit an indication of the handover situation to the network node 104, and the network node 104 may mute as many antenna ports or elements as possible (e.g., $s_a \to 0$). The network node 104 may boost the power on the remaining antenna ports or elements to compensate for the muting and thus fulfil the one or more quality of service requirements. Alternatively, or additionally, the network node 104 may optimize or adjust one or more other resource parameters (other than $s_a$), such as bandwidth $s_f$, power $s_p$ and/or time $s_t$, to achieve NES gains.

Alternatively, in block 704, based on determining that a handover is not expected to be performed (block 702: no), the apparatus 1400 determines whether the apparatus 1400 is in a low energy or battery status (e.g., whether a remaining battery capacity or an energy harvesting rate of the apparatus 1400 is below a first threshold).

In block 705, based on determining that the apparatus 1400 is in the low energy or battery status (block 704: yes), the apparatus 1400 determines the prioritized data rate backoff value by selecting a high data rate backoff value from the plurality of data rate backoff values in order to increase the idle time for more energy harvesting or recharging the battery of the apparatus 1400. The high data rate backoff value may refer to a data rate backoff value that is higher than the average of the plurality of data rate backoff values (e.g., the highest or second-highest value).

For example, an energy-harvesting UE may use the current battery or energy status and/or current or future energy harvesting rate to determine an optimal data rate backoff value from the plurality of data rate backoff values. The energy-harvesting UE may prioritize higher backoff values, if the UE has a lower battery energy status and/or higher energy harvesting rate (in order to save energy when it is not available).

Alternatively, in block 706, based on determining that the apparatus 1400 is not in the low energy or battery status (block 704: no), the apparatus 1400 determines whether the apparatus 1400 is in a high energy or battery status (e.g., whether the remaining battery capacity or the energy harvesting rate is above a second threshold).

In block 707, based on determining that the apparatus 1400 is in the high energy or battery status (block 706: yes), the apparatus 1400 determines the prioritized data rate backoff value by selecting a low data rate backoff value from the plurality of data rate backoff values in order to avoid energy storage overflow or overload, or to utilize harvested energy more efficiently. The low data rate backoff value may refer to a data rate backoff value that is lower than the average of the plurality of data rate backoff values (e.g., the lowest or second-lowest value).

For example, an energy-harvesting UE may use the current battery or energy status and/or current or future energy harvesting rate to determine an optimal data rate backoff value from the plurality of data rate backoff values. The energy-harvesting UE may prioritize lower backoff values, if the UE has a higher battery energy status and/or higher energy harvesting rate (since it is good to use energy when it is available).

Alternatively, in block 708, based on determining that the apparatus 1400 is not in the high energy or battery status (block 706: no), the apparatus 1400 determines whether it has high-priority data to be transmitted.

In block 709, based on determining that the apparatus 1400 has high-priority data to be transmitted, the apparatus 1400 selects none of the values in the plurality of data rate backoff values in order to schedule the high-priority data more frequently. In other words, in case of high-priority data, the apparatus 1400 may decide to implement no data rate backoff in order to transmit and/or receive data with lower latency. In this case, the apparatus 1400 may transmit the NACK to the network node 104 to request the network node 104 to transmit with the maximum achievable data rate, and the network node 104 may not mute any antenna ports or elements, i.e., the network node 104 may utilize the maximum number of antennas of the network node 104 (e.g., $s_a \to 1$).

Alternatively, in block 710, based on determining that the apparatus 1400 does not have high-priority data to be transmitted, the apparatus 1400 determines the prioritized data rate backoff value by selecting a data rate backoff value preferred by the network node 104 from the plurality of data rate backoff values. For example, the data rate backoff value preferred by the network node 104 may refer to the first data rate backoff value in a list of values comprising the plurality of data rate backoff values.

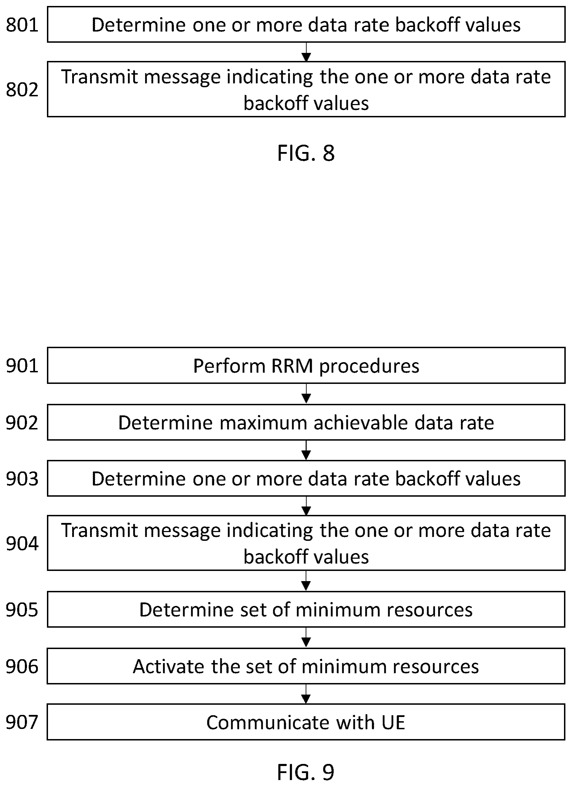

FIG. 8 illustrates a flow chart according to an example embodiment of a method for energy-efficient data rate backoff. The method of FIG. 8 may be performed by an apparatus 1500 depicted in FIG. 15. For example, the apparatus 1500 may be, or comprise, or be comprised in, a network node 104 of a radio access network.

Referring to FIG. 8, in block 801, the apparatus 1500 determines one or more data rate backoff values for reducing a data rate limit of a radio link between the apparatus 1500 and a user equipment 100 to be less than a maximum achievable data rate of the radio link, while fulfilling one or more quality of service requirements of the user equipment 100.

The one or more data rate backoff values may be determined based on a goal of maximizing network energy savings (i.e., energy savings at the apparatus 1500 or at the network node 104) by reducing the data rate limit, subject to fulfilling the one or more quality of service requirements of the user equipment 100. In other words, the one or more data rate backoff values may be determined for maximizing the network energy savings, such that the one or more quality of service requirements are still fulfilled (or at least expected to be fulfilled). That is, fulfilling the one or more quality of service requirements is a constraint on the goal of maximizing the network energy savings.

For example, the one or more data rate backoff values may be determined based on at least one of: a discontinuous transmission cycle frequency of the user equipment 100, a discontinuous reception cycle frequency of the user equipment 100, a class of the user equipment 100, or a category of the user equipment 100. The determination may be further based on the maximum achievable data rate of the radio link, and the one or more quality of service requirements of the user equipment 100.

For example, the one or more quality of service requirements may comprise at least one of: a block error rate requirement, a bit rate requirement, a transmission delay requirement, a throughput requirement, or a service availability requirement.

In block 802, the apparatus 1500 transmits, to the user equipment 100, a message indicating the one or more data rate backoff values.

The apparatus 1500 may transmit, to the user equipment 100, configuration information associated with a set of data rate backoff values, wherein the one or more data rate backoff values are part of the set of data rate backoff values.

For example, the configuration information associated with the set of data rate backoff values may indicate to perform at least one of: configuring a precoding matrix indicator different from a precoding matrix indicator configured for the maximum achievable data rate of the radio link, or configuring a modulation coding scheme index different from a modulation coding scheme index configured for the maximum achievable data rate of the radio link.

The apparatus 1500 may receive, from the user equipment 100, a response to the message, wherein the response indicates an acknowledgement of the one or more data rate backoff values indicated in the message (or an acknowledgement of at least one data rate backoff value of the one or more data rate backoff values). The apparatus 1500 may determine, based on the response, a set of minimum network resources sufficient for fulfilling the one or more quality of service requirements of the user equipment 100 with the one or more data rate backoff values (or with the one data rate backoff value). The apparatus 1500 may communicate with the user equipment 100 over the radio link based on the set of minimum network resources.

The apparatus 1500 may mute a subset of antenna elements of the apparatus 1500 based on the determination of the set of minimum network resources; and boost a power level of one or more remaining active antenna elements of the apparatus 1500 for fulfilling the one or more quality of service requirements of the user equipment 100.

Alternatively, the apparatus 1500 may receive, from the user equipment 100, a response to the message, wherein the response indicates a negative acknowledgement of the one or more data rate backoff values indicated in the message. Based on receiving the response indicating the negative acknowledgement, the apparatus 1500 may communicate with the user equipment 100 over the radio link with the maximum achievable data rate (e.g., transmit data to the user equipment 100 with the maximum achievable data rate, and/or receive data from the user equipment 100 with the maximum achievable data rate).

Alternatively, based on receiving the response indicating the negative acknowledgement, the apparatus 1500 may determine an updated data rate backoff value for increasing the data rate limit closer to the maximum achievable data rate; and transmit, to the user equipment 100, a further message indicating the updated data rate backoff value.

In one embodiment, the one or more data rate backoff values indicated in the message may comprise a plurality of data rate backoff values. The apparatus 1500 may receive, from the user equipment 100, a response to the message, wherein the response indicates a prioritized data rate backoff value from the plurality of data rate backoff values. The apparatus 1500 may determine, based on the response, a set of minimum network resources sufficient for fulfilling the one or more quality of service requirements of the user equipment 100 with the prioritized data rate backoff value. The apparatus 1500 may communicate with the user equipment 100 over the radio link based on the set of minimum network resources.

FIG. 9 illustrates a flow chart according to an example embodiment of a method for energy-efficient data rate backoff. The method of FIG. 9 may be performed by an apparatus 1500 depicted in FIG. 15. For example, the apparatus 1500 may be, or comprise, or be comprised in, a network node 104 of a radio access network.

Referring to FIG. 9, in block 901, the apparatus 1500 performs RRM procedures to receive measurements and reports from a user equipment 100 (e.g., as described for 201 of FIG. 2).

In block 902, based on the measurements and reports received from the user equipment 100, the apparatus 1500 determines a maximum achievable data rate of a radio link between the apparatus 1500 and the user equipment 100.

In block 903, the apparatus 1500 determines one or more data rate backoff values for reducing a data rate limit of a radio link between the apparatus 1500 and the user equipment 100 to be less than the maximum achievable data rate of the radio link, while fulfilling one or more quality of service requirements of the user equipment 100 (or subject to fulfilling the one or more quality of service requirements).

The one or more data rate backoff values may be determined based on a goal of maximizing network energy savings by reducing the data rate limit, subject to fulfilling the one or more quality of service requirements of the user equipment 100. In other words, the one or more data rate backoff values may be determined for maximizing the network energy savings, such that the one or more quality of service requirements are still fulfilled (or at least expected to be fulfilled).

For example, the one or more data rate backoff values may be determined based on at least one of: a discontinuous transmission cycle frequency of the user equipment 100, a discontinuous reception cycle frequency of the user equipment 100, a class of the user equipment 100, or a category of the user equipment 100. The determination may be further based on the maximum achievable data rate of the radio link, and the one or more quality of service requirements of the user equipment 100.

For example, the one or more quality of service requirements may comprise at least one of: a block error rate requirement, a bit rate requirement, a transmission delay requirement, a throughput requirement, or a service availability requirement.

In block 904, the apparatus 1500 transmits, to the user equipment 100, a message indicating the one or more data rate backoff values.

In block 905, the apparatus 1500 determines a set of minimum network resources sufficient for fulfilling the one or more quality of service requirements of the user equipment 100 with the one or more data rate backoff values. The aim is to determine UE-specific minimum required parameters (e.g., $\{s_a, s_p, s_f, s_t\}$), such that the UE's QoS requirement(s) are satisfied, while achieving maximum energy saving gains.

In block 906, the apparatus 1500 configures or activates the set of minimum network resources for communicating with the user equipment 100.

In block 907, the apparatus 1500 communicates with the user equipment 100 over the radio link based on the set of minimum network resources (in uplink and/or downlink).

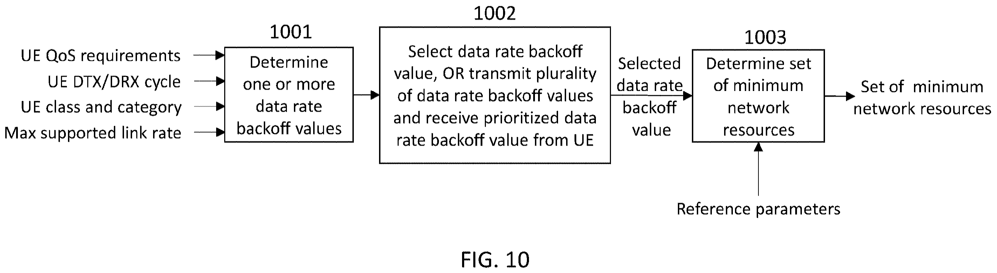

FIG. 10 illustrates a block diagram according to an example embodiment to show the possible input parameters for the determinations made by the network node 104.

Referring to FIG. 10, in block 1001, the network node 104 determines one or more data rate backoff values based on input information comprising at least one of: one or more quality of service requirements of the UE 100, a DRX cycle frequency of the UE 100, a DTX cycle frequency of the UE 100, a class of the UE 100, a category of the UE 100, or a maximum achievable data rate of the radio link between the network node 104 and the UE 100.

In block 1002, in case the one or more data rate backoff values comprise a plurality of data rate backoff values, the network node 104 selects one of the values. Alternatively, the network node 104 may transmit, to the UE 100, a message indicating the plurality of data rate backoff values, and receive, from the UE 100, a response indicating a prioritized data rate backoff value selected by the UE 100 from the plurality of data rate backoff values.

In block 1003, the network node 104 determines a set of minimum network resources sufficient for fulfilling the one or more quality of service requirements of the UE 100 with the data rate backoff value selected by the network node 104 or by the UE 100, while maximizing network energy savings. The one or more quality of service requirements and the selected data rate backoff value may be used as input information for determining the set of minimum network resources. The determination of the set of minimum network resources may also be based on one or more reference parameters comprising at least one of: a current antenna configuration of the network node 104, or a power configuration of the network node 104.

The date rate limit after applying the selected data rate backoff value may be equal to the maximum achievable data rate of the radio link subtracted by the selected data rate backoff value.

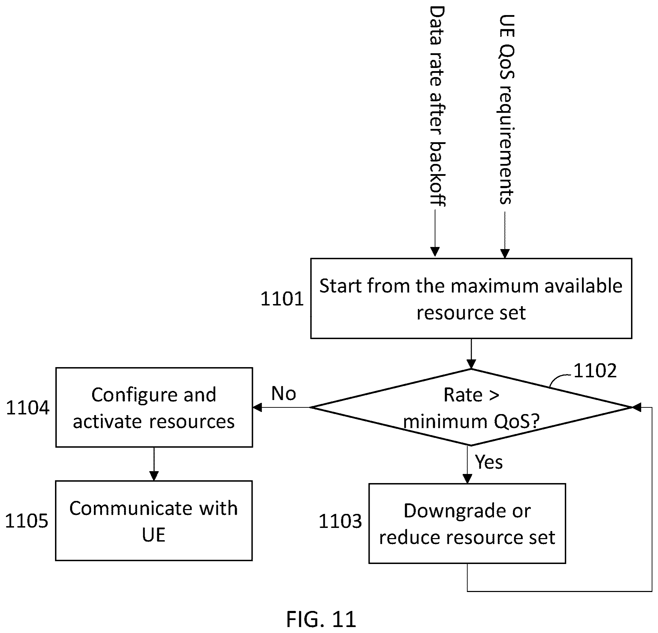

FIG. 11 illustrates a flow chart according to an example embodiment of a method for determining the set of minimum network resources (e.g., at 210 of FIG. 2, block 905 of FIG. 9, or block 1003 of FIG. 10). The method of FIG. 11 may be performed by an apparatus 1500 depicted in FIG. 15. For example, the apparatus 1500 may be, or comprise, or be comprised in, a network node 104 of a radio access network.

This example embodiment is based on iterative refinement, for example successively downgrading or reducing the set of network resources until the UE's minimum QoS requirement(s) (e.g., block error rate, bit rate, transmission delay, throughput, and/or service availability) are satisfied. The input information for the determination of the set of minimum network resources may comprise the one or more quality of service requirements of the UE 100, and the data rate limit of the radio link resulting from applying the selected data rate backoff value to the maximum achievable data rate of the radio link.

Referring to FIG. 11, in block 1101, the apparatus 1500 determines a set of maximum network resources available at the apparatus 1500.

In block 1102, the apparatus 1500 determines whether the data rate of the radio link (after the backoff) is larger than the one or more (minimum) quality of service requirements of the UE 100.

In block 1103, based on determining that the data rate limit is larger than the one or more (minimum) quality of service requirements (block 1102: yes), the apparatus 1500 downgrades or reduces the set of maximum available network resources to obtain a reduced set of network resources.

Following block 1103, the process returns to block 1102, where the apparatus 1500 determines whether the data rate achievable with the reduced set of network resources is larger than the one or more (minimum) quality of service requirements.

If the data rate achievable with the reduced set of network resources is larger than the one or more (minimum) quality of service requirements, then blocks 1103 and 1102 may be repeated iteratively until the achievable data rate is equal to the one or more (minimum) quality of service requirements.

In block 1104, based on determining that the data rate is not larger than the one or more (minimum) quality of service requirements (block 1102: no), i.e., the data rate is equal to the one or more (minimum) quality of service requirements, the reduced set of network resources after all the iterations of blocks 1103 and 1102 is determined as the set of minimum network resources sufficient for fulfilling the one or more quality of service requirements. The apparatus 1500 configures and/or activates the set of minimum network resources.

In block 1105, the apparatus 1500 communicates with the UE 100 (in uplink and/or downlink) by using the set of minimum network resources.

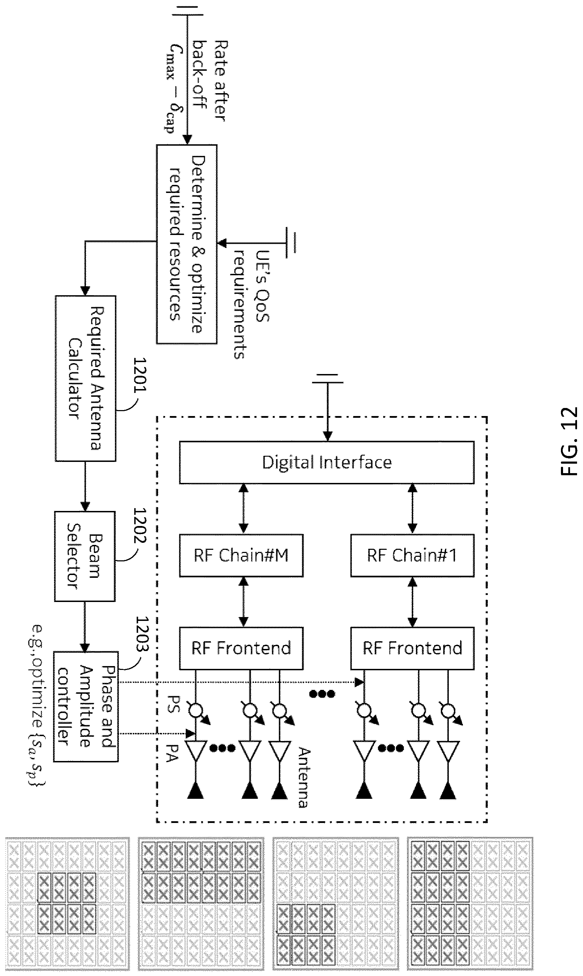

FIG. 12 illustrates an example embodiment of antenna adaptation at the network node 104.

Referring to FIG. 12, in block 1201, the network node 104 determines and optimizes the set of minimum network resources (e.g., spatial antenna elements $s_a$), required to satisfy the UE's QoS requirement(s).

In block 1202, network node 104 (or the radio unit 103 of the network node 104) redefines the preferred beamforming directions, with the available active antennas, for data communication.

In block 1203, the network node 104 employs the required phase-amplitude scaling. More specifically, the phase-amplitude controller applies appropriate phase-shifts and amplitude scaling to each antenna element. Moreover, the beamforming weights can be applied at different layers in the protocol stack, and it involves multiplying the complex IQ data with complex weight, e.g., phase-amplitude scaling. IQ stands for in-phase (I) and quadrature (Q) signals.

The blocks, related functions, and information exchanges (messages) described above by means of FIGS. 2 to 12 are in no absolute chronological order, and some of them may be performed simultaneously or in an order differing from the described one. Other functions can also be executed between them or within them, and other information may be sent, and/or other rules applied. Some of the blocks or part of the blocks or one or more pieces of information can also be left out or replaced by a corresponding block or part of the block or one or more pieces of information.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

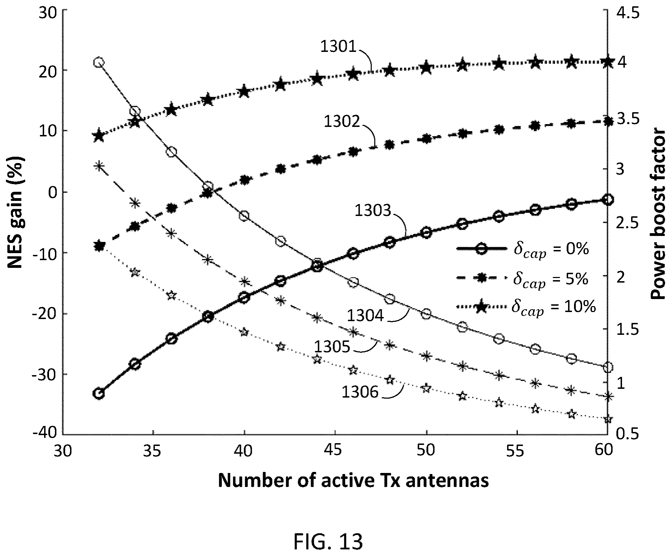

FIG. 13 illustrates simulation results showing examples of NES gains with increasing resource usage in spatial domain (e.g., increasing the parameter $s_a$ for active transmit antennas).

For example, the power consumption modeling for the network node (e.g., gNB) 104 may be done as follows:

$$P^{DL} = s_t \cdot \left\{ P^{DL}_{static} + P^{DL}_{dynamic} \right\} + (1 - s_t) \cdot P^{DL}_{static}$$

$$P^{DL}_{static} = P_{microsleep}$$

$$P^{DL}_{dynamic} = s_a \cdot \frac{s_f \cdot s_p}{\eta\left(s_f,\ s_p\right)} \cdot P_{dyn,joint} + s_a \cdot P^{DL}_{dyn,ant}$$

$$P^{DL}_{dyn,ant} = A \cdot \left( P_{ActiveDL} - P_{microsleep} \right)$$

$$P_{dyn,Joint} = (1 - A) \cdot \left( P_{ActiveDL} - P_{microsleep} \right)$$

where the achievable SINR may be computed using the link-budget model and for example a simulator, with the parameter values defined below in Tables 2, 3 and 4.

Table 2. Description of parameters

| Parameter | Value | Description |
|---|---|---|
| $P_{microsleep}$ | 5.5 | For BS category 2 and Set 1 |
| $P_{ActiveDL}$ | 32 | For BS category 2 and Set 1 |
| $A$ | 0.4 | Baseline value from TR 38.864 |
| $s_t$ | (0, 1] | fraction of active transmit/receive state |
| $s_a$ | (0, 1] | fraction of active transceiver units (antennas) |
| $s_f$ | (0, 1] | the resource usage ratio in the frequency domain |
| $s_p$ | (0, 1] | the ratio of power spectral density during transmission |
| $\eta(s_f, s_p)$ | 1 | the power amplifier efficiency factor |

Table 3. Parameter description of gNB configuration

| Parameter | Unit | Value |
|---|---|---|
| Frequency range | GHz | 4 |
| System bandwidth | MHz | 100 |
| Subcarrier spacing (SCS) | kHz | 30 |
| Physical resource block (PRB) | # | 272 |
| DL TRx RUs | # | 64 |
| Total DL Tx. Power (baseline) | W | 320 |
| Tx. Power per Ant. (baseline) | W | 5 |

Table 4. Parameter description of the link budget model

| Parameter | Unit | Value |
|---|---|---|
| AE gain of gNB | dBi | 8 |
| MU MIMO | # | 8 |
| MIMO Layers | # | 8 |
| NF of UE | dB | 9 |
| Antenna gain of UE | dBi | 0 |
| Pathloss ETSI24 TS | dB | 85 |
| Additional Intf. | dB | 15 |
| T | K | 300 |

For simplicity, a simplistic case is assumed wherein the network node employs muting a subset of active antenna ports or elements (e.g., parameter $s_a \in (0,1]$). The reduction in achievable SINR (e.g., due to less beamforming gain) may then be compensated by applying the power boost factor $\alpha$ (e.g., parameter $s_p$ will change) on active antennas, and thus meet the UE's QoS requirements. The problem can be modelled as:

$$\min \quad \alpha P_{tx}$$

$$s.t. \quad C \geq C_{\max} - \delta_{cap}$$

$$\alpha \geq 0$$

where the parameter C denotes the UE's minimum QoS requirements and $\delta_{cap}$ is the data rate backoff value. Hence, the problem aims at finding the minimum required transmit power per antenna such that the UE's QoS requirements are satisfied.

In FIG. 13, the curves 1301, 1302, 1303 illustrate NES gains with different data rate backoff values depending on the number of active transmit antennas (e.g., increasing parameter $s_a$), and the curves 1304, 1305, 1306 illustrate power boost factors needed to ensure the UE's QoS requirements for different data rate backoff values depending on the number of active transmit antennas. It can be observed from FIG. 13 that the achievable DL data rate increases with the increase in the fraction of active transmit antennas (i.e., with the increase in the value of the parameter $s_a$), and thus less power boosting will be required to meet the desired QoS requirements. In contrast, with less active antennas (i.e., lower value of the parameter $s_a$), the reduced beamforming gain is compensated by applying a higher power boost factor, thus leading to reduced NES. However, as the UE-agreed data rate back-off value $\delta_{cap}$ is applied for relaxed QoS, less power boost will be required, and thus the achievable network energy saving is significant. As an example, with 50 active transmit antennas, the data rate back-off $\delta_{cap}$ = {5%, 10%} provides NES gains of {9%, 20%}, respectively.

The network node 104 has one or more to options to optimize the set of minimum network resources (e.g., $\{s_a, s_f, s_p, s_t\}$) for achieving a better and more favorable balance on the UE's QoS and network energy savings aspects. As an example, assuming a data rate back-off value $\delta_{cap}$ = 12.5%., the network node 104 may perform one of the following to meet the desired QoS requirements (e.g., $C \geq C_{max} - \delta_{cap}$): muting half of its active transmit antennas and applying a 3 decibel (dB) power boost (i.e., $s_p$ = 2, $s_a$ = 0.5), which achieves a power gain of 16.5%; or applying a power backoff per antenna while keeping all transmit antennas active (i.e., $s_p$ = 0.5, $s_p$ = 1), which achieves a power gain of 24.8% and higher energy efficiency. Thus, the network node 104 may have one or more options for selection of the minimum network resources to satisfy the QoS requirements. Table 5 below shows examples of achievable NES gains with different resource options.

Table 5. Examples on achievable NES gains with different parameter selections.

| Parameters | Case#0 Baseline, 64Tx, 5W/Ant | Case#1 64Tx, 2.5W/Ant | Case#2 3 dB Boost 32Tx, 10 W/Ant |
|---|---|---|---|
| # of Tx. Ant. | 64 | 64 | 32 |
| Tx. power per Ant. (W) | 5 | 2.5 | 5x2=10 |
| Total Tx. Power (W) | 320 | 160 | 160 x 2 = 320 |
| $s_a$ | 1 | 1 | 0.5 |
| $s_p = \dfrac{\text{Tot. Tx. Power}_x \text{ per Ant.}/\text{BW}_x}{\text{Tot. Tx. Power}_{ref} \text{ per Ant.}/\text{BW}_{ref}}$ | 1 | 0.5 | 2 |
| $C$ | 63.8094 | 55.8551 | 55.8551 |
| $P^{DL}$ | 32 | 24.05 | 26.70 |
| Rate back-off value, $\delta_{cap}\%$ | - | 12.5 | 12.5 |
| Power gain% $= \dfrac{P_{ActiveDL} - P^{DL}}{P_{ActiveDL}} \cdot 100$ | - | 24.8437 | 16.5625 |
| Energy Efficiency $= \dfrac{\text{Achievable Capcity}, C}{\text{Tx. Power}, P_{DL}}$ | 1.9940 | 2.3225 | 2.0920 |

FIG. 14 illustrates an example of an apparatus 1400 comprising means for performing one or more of the example embodiments described above (e.g., the method of FIG. 6 and/or the method of FIG. 7). For example, the apparatus 1400 may be an apparatus such as, or comprising, or comprised in, a user equipment (UE) 100, 102. The user equipment may also be called a wireless communication device, a subscriber unit, a mobile station, a remote terminal, an access terminal, a user terminal, a terminal device, or a user device.

The apparatus 1400 may comprise a circuitry or a chipset applicable for realizing one or more of the example embodiments described above. For example, the apparatus 1400 may comprise at least one processor 1410. The at least one processor 1410 interprets instructions (e.g., computer program instructions) and processes data. The at least one processor 1410 may comprise one or more programmable processors. The at least one processor 1410 may comprise programmable hardware with embedded firmware and may, alternatively or additionally, comprise one or more application-specific integrated circuits (ASICs).

The at least one processor 1410 is coupled to at least one memory 1420. The at least one processor is configured to read and write data to and from the at least one memory 1420. The at least one memory 1420 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The at least one memory 1420 stores computer readable instructions that are executed by the at least one processor 1410 to perform one or more of the example embodiments described above. For example, non-volatile memory stores the computer readable instructions, and the at least one processor 1410 executes the instructions using volatile memory for temporary storage of data and/or instructions. The computer readable instructions may refer to computer program code.

The computer readable instructions may have been pre-stored to the at least one memory 1420 or, alternatively or additionally, they may be received, by the apparatus, via an electromagnetic carrier signal and/or may be copied from a physical entity such as a computer program product. Execution of the computer readable instructions by the at least one processor 1410 causes the apparatus 1400 to perform one or more of the example embodiments described above. That is, the at least one processor and the at least one memory storing the instructions may provide the means for providing or causing the performance of any of the methods and/or blocks described above.

In the context of this document, a "memory" or "computer-readable media" or "computer-readable medium" may be any non-transitory media or medium or means that can contain, store, communicate, propagate or transport the instructions for use by or in connection with an instruction execution system, apparatus, or device, such as a computer. The term "non-transitory," as used herein, is a limitation of the medium itself (i.e., tangible, not a signal) as opposed to a limitation on data storage persistency (e.g., RAM vs. ROM).

The apparatus 1400 may further comprise, or be connected to, an input unit 1430. The input unit 1430 may comprise one or more interfaces for receiving input. The one or more interfaces may comprise for example one or more temperature, motion and/or orientation sensors, one or more cameras, one or more accelerometers, one or more microphones, one or more buttons and/or one or more touch detection units. Further, the input unit 1430 may comprise an interface to which external devices may connect to.

The apparatus 1400 may also comprise an output unit 1440. The output unit may comprise or be connected to one or more displays capable of rendering visual content, such as a light emitting diode (LED) display, a liquid crystal display (LCD) and/or a liquid crystal on silicon (LCoS) display. The output unit 1440 may further comprise one or more audio outputs. The one or more audio outputs may be for example loudspeakers.

The apparatus 1400 further comprises a connectivity unit 1450. The connectivity unit 1450 enables wireless connectivity to one or more external devices. The connectivity unit 1450 comprises at least one transmitter and at least one receiver that may be integrated to the apparatus 1400 or that the apparatus 1400 may be connected to. The at least one transmitter comprises at least one transmission antenna, and the at least one receiver comprises at least one receiving antenna. The connectivity unit 1450 may comprise an integrated circuit or a set of integrated circuits that provide the wireless communication capability for the apparatus 1400. Alternatively, the wireless connectivity may be a hardwired application-specific integrated circuit (ASIC). The connectivity unit 1450 may also provide means for performing at least some of the blocks or functions of one or more example embodiments described above. The connectivity unit 1450 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

It is to be noted that the apparatus 1400 may further comprise various components not illustrated in FIG. 14. The various components may be hardware components and/or software components.

FIG. 15 illustrates an example of an apparatus 1500 comprising means for performing one or more of the example embodiments described above (e.g., the method of FIG. 8, the method of FIG. 9, the method of FIG. 10, the method of FIG. 11, and/or the method of FIG. 12). For example, the apparatus 1500 may be an apparatus such as, or comprising, or comprised in, a network node 104 of a radio access network. In one embodiment, the apparatus 1500 may be a central unit 108 of the network node 104.

The apparatus 1500 may comprise, for example, a circuitry or a chipset applicable for realizing one or more of the example embodiments described above. The apparatus 1500 may be an electronic device comprising one or more electronic circuitries. The apparatus 1500 may comprise a communication control circuitry 1510 such as at least one processor, and at least one memory 1520 storing instructions 1522 which, when executed by the at least one processor, cause the apparatus 1500 to carry out one or more of the example embodiments described above. Such instructions 1522 may, for example, include computer program code (software). The at least one processor and the at least one memory storing the instructions may provide the means for providing or causing the performance of any of the methods and/or blocks described above.

The processor is coupled to the memory 1520. The processor is configured to read and write data to and from the memory 1520. The memory 1520 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 1520 stores computer readable instructions that are executed by the processor. For example, non-volatile memory stores the computer readable instructions, and the processor executes the instructions using volatile memory for temporary storage of data and/or instructions.

The computer readable instructions may have been pre-stored to the memory 1520 or, alternatively or additionally, they may be received, by the apparatus, via an electromagnetic carrier signal and/or may be copied from a physical entity such as a computer program product. Execution of the computer readable instructions causes the apparatus 1500 to perform one or more of the functionalities described above.

The memory 1520 may be implemented using any suitable data storage technology, such as semiconductor-based memory devices, flash memory, magnetic memory devices and systems, optical memory devices and systems, fixed memory and/or removable memory. The memory may comprise a configuration database for storing configuration data, such as a current neighbour cell list, and, in some example embodiments, structures of frames used in the detected neighbour cells.

The apparatus 1500 may further comprise or be connected to a communication interface 1530, such as a radio unit, comprising hardware and/or software for realizing communication connectivity with one or more wireless communication devices according to one or more communication protocols. The communication interface 1530 comprises at least one transmitter (Tx) and at least one receiver (Rx) that may be integrated to the apparatus 1500 or that the apparatus 1500 may be connected to. The communication interface 1530 may provide means for performing some of the blocks and/or functions (e.g., transmitting and receiving) for one or more example embodiments described above. The communication interface 1530 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

The communication interface 1530 provides the apparatus with radio communication capabilities to communicate in the wireless communication network. The communication interface may, for example, provide a radio interface to one or more UEs 100, 102. The apparatus 1500 may further comprise or be connected to another interface towards a core network 110, such as the network coordinator apparatus or AMF, and/or to other access nodes of the wireless communication network.

The apparatus 1500 may further comprise a scheduler 1540 that is configured to allocate radio resources. The scheduler 1540 may be configured along with the communication control circuitry 1510 or it may be separately configured.

It is to be noted that the apparatus 1500 may further comprise various components not illustrated in FIG. 15. The various components may be hardware components and/or software components.

As used in this application, the term "circuitry" may refer to one or more or all of the following: a) hardware-only circuit implementations (such as implementations in only analog and/or digital circuitry); and b) combinations of hardware circuits and software, such as (as applicable): i) a combination of analog and/or digital hardware circuit(s) with software/firmware and ii) any portions of hardware processor(s) with software (including digital signal processor(s), software, and memory(ies) that work together to cause an apparatus, such as a mobile phone, to perform various functions); and c) hardware circuit(s) and/or processor(s), such as a microprocessor(s) or a portion of a microprocessor(s), that requires software (for example firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of example embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (for example procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

It will be obvious to a person skilled in the art that, as technology advances, the inventive concept may be implemented in various ways within the scope of the claims. The embodiments are not limited to the example embodiments described above, but may vary within the scope of the claims. Therefore, all words and expressions should be interpreted broadly, and they are intended to illustrate, not to restrict, the embodiments.

## Claims

1. An apparatus (104, 1500) comprising at least one processor (1510), and at least one memory (1520) storing instructions (1522) that, when executed by the at least one processor (1510), cause the apparatus (104, 1500) at least to:

   determine a plurality of data rate backoff values for reducing a data rate limit of a radio link between the apparatus (104, 1500) and a user equipment (100) to be less than a maximum achievable data rate of the radio link, while fulfilling one or more quality of service requirements of the user equipment (100);
   transmit, to the user equipment (100), a message indicating the plurality of data rate backoff values;
   receive, from the user equipment (100), a response to the message, wherein the response indicates a prioritized data rate backoff value from the plurality of data rate backoff values,
   wherein the prioritized data rate backoff value is based on at least one of: a mobility status of the user equipment (100), a battery status of the user equipment (100), an energy status of the user equipment (100), or a present or expected energy harvesting rate of the user equipment (100); and
   communicate with the user equipment (100) over the radio link with a data rate indicated by the prioritized data rate backoff value.

2. The apparatus (104, 1500) of claim 1, wherein the plurality of data rate backoff values are determined based on a goal of maximizing network energy savings by reducing the data rate limit, subject to fulfilling the one or more quality of service requirements of the user equipment (100).

3. The apparatus (104, 1500) of any preceding claim, further being caused to:

   transmit, to the user equipment (100), configuration information associated with a set of data rate backoff values, wherein the plurality of data rate backoff values are part of the set of data rate backoff values.

4. The apparatus (104, 1500) of claim 3, wherein the configuration information associated with the set of data rate backoff values indicates to perform at least one of:

   configuring a precoding matrix indicator different from a precoding matrix indicator configured for the maximum achievable data rate of the radio link, or
   configuring a modulation coding scheme index different from a modulation coding scheme index configured for the maximum achievable data rate of the radio link.

5. The apparatus (104, 1500) of any preceding claim, wherein the plurality of data rate backoff values are determined based on at least one of:

> a discontinuous transmission cycle frequency of the user equipment (100),
> a discontinuous reception cycle frequency of the user equipment (100),
> a class of the user equipment (100), or
> a category of the user equipment (100).

6. The apparatus (104, 1500) of any of claims 1 to 5, wherein the apparatus (104, 1500) is further caused to: determine, based on the response, a set of minimum network resources sufficient for fulfilling the one or more quality of service requirements of the user equipment (100) with the prioritized data rate backoff value; wherein the one or more quality of service requirements comprise at least one of:

> a block error rate requirement,
> a bit rate requirement,
> a transmission delay requirement,
> a throughput requirement, or
> a service availability requirement;
> and

communicate with the user equipment (100) over the radio link based on the set of minimum network resources.

7. An apparatus (100, 1400) comprising at least one processor (1410), and at least one memory (1420) storing instructions that, when executed by the at least one processor (1410), cause the apparatus (100, 1400) at least to:

> receive, from a network node (104), a message indicating a plurality of data rate backoff values for reducing a data rate limit of a radio link between the network node (104) and the apparatus (100, 1400) to be less than a maximum achievable data rate of the radio link, while fulfilling one or more quality of service requirements of the apparatus (100, 1400);
> determine a prioritized data rate backoff value from the plurality of data rate backoff values, wherein the determination of the prioritized data rate backoff value is based on at least one of: a mobility status of the apparatus (100, 1400), a battery status of the apparatus (100, 1400), an energy status of the apparatus (100, 1400), or a present or expected energy harvesting rate of the apparatus (100, 1400);
> adjust power consumption of the apparatus (100, 1400) based on the prioritized data rate backoff value;
> transmit, to the network node (104), a response to the message, wherein the response indicates the prioritized data rate backoff value; and
> communicate with the network node (104) over the radio link with a data rate indicated by the prioritized data rate backoff value.

8. The apparatus (100, 1400) of claim 7, wherein the adjustment of the power consumption comprises at least one of:

> adjusting flip-flop cycles associated with a sampling rate of data received over the radio link,
> deactivating one or more antenna elements of the apparatus (100, 1400), or
> reducing a transmit power associated with transmitting data over the radio link.

9. The apparatus (100, 1400) of any of claims 7 to 8, further being caused to:

> receive, from the network node (104), configuration information associated with a set of data rate backoff values, wherein the plurality of data rate backoff values are part of the set of data rate backoff values;
> determine a subset of the configuration information corresponding to the prioritized data rate backoff value; and
> apply the subset of the configuration information corresponding to the prioritized data rate backoff value;
> wherein applying the subset of the configuration information comprises:

>> configuring a precoding matrix indicator corresponding to the prioritized data rate backoff value, wherein the precoding matrix indicator is different from a precoding matrix indicator corresponding to the maximum achievable data rate of the radio link, or
>> configuring a modulation coding scheme index corresponding to the prioritized data rate backoff value, wherein the modulation coding scheme index is different from a modulation coding scheme index corresponding to the maximum achievable data rate of the radio link.

10. The apparatus (100, 1400) of any of claims 7 to 9, wherein the prioritized data rate backoff value comprises a highest data rate backoff value from the plurality of data rate backoff values, based on the mobility status indicating that a handover is expected to be performed.

11. A method comprising:

determining (205, 305, 405, 505, 801, 903), by an apparatus (104, 1500), a plurality of data rate backoff values for reducing a data rate limit of a radio link between the apparatus (104, 1500) and a user equipment (100) to be less than a maximum achievable data rate of the radio link, while fulfilling one or more quality of service requirements of the user equipment (100);

transmitting (206, 306, 406, 506, 802, 904), by the apparatus (104, 1500), to the user equipment (100), a message indicating the plurality of data rate backoff values;

receiving, from the user equipment (100), a response to the message, wherein the response indicates a prioritized data rate backoff value from the plurality of data rate backoff values,

wherein the prioritized data rate backoff value is based on at least one of: a mobility status of the user equipment (100), a battery status of the user equipment (100), an energy status of the user equipment (100), or a present or expected energy harvesting rate of the user equipment (100); and

communicating with the user equipment (100) over the radio link with a data rate indicated by the prioritized data rate backoff value.

12. A method comprising:

receiving (206, 306, 406, 506, 601), by an apparatus (100, 1400), from a network node (104), a message indicating a plurality of data rate backoff values for reducing a data rate limit of a radio link between the network node (104) and the apparatus (100, 1400) to be less than a maximum achievable data rate of the radio link, while fulfilling one or more quality of service requirements of the apparatus (100, 1400);

determining a prioritized data rate backoff value from the plurality of data rate backoff values,

wherein the determination of the prioritized data rate backoff value is based on at least one of: a mobility status of the apparatus (100, 1400), a battery status of the apparatus (100, 1400), an energy status of the apparatus (100, 1400), or a present or expected energy harvesting rate of the apparatus (100, 1400);

adjusting (207, 410, 508, 602), by the apparatus (100, 1400), power consumption of the apparatus (1400) based on the prioritized data rate backoff value;

transmitting, to the network node (104), a response to the message, wherein the response indicates the prioritized data rate backoff value; and

communicating with the network node (104) over the radio link with a data rate indicated by the prioritized data rate backoff value.

13. A non-transitory computer readable medium comprising program instructions which, when executed by an apparatus (104, 1500), cause the apparatus (104, 1500) to perform at least the following:

determining a plurality of data rate backoff values for reducing a data rate limit of a radio link between the apparatus (104, 1500) and a user equipment (100) to be less than a maximum achievable data rate of the radio link, while fulfilling one or more quality of service requirements of the user equipment (100);

transmitting to the user equipment (100), a message indicating the plurality of data rate backoff values;

receiving, from the user equipment (100), a response to the message, wherein the response indicates a prioritized data rate backoff value from the plurality of data rate backoff values,

wherein the prioritized data rate backoff value is based on at least one of: a mobility status of the user equipment (100), a battery status of the user equipment (100), an energy status of the user equipment (100), or a present or expected energy harvesting rate of the user equipment (100); and

communicating with the user equipment (100) over the radio link with a data rate indicated by the prioritized data rate backoff value.

14. A non-transitory computer readable medium comprising program instructions which, when executed by an apparatus (100, 1400), cause the apparatus (100, 1400) to perform at least the following:

receiving, from a network node (104), a message indicating a plurality of data rate backoff values for reducing a data rate limit of a radio link between the network node (104) and the apparatus (100, 1400) to be less than a maximum achievable data rate of the radio link, while fulfilling one or more quality of service requirements of the apparatus (100, 1400);
determining a prioritized data rate backoff value from the plurality of data rate backoff values,
wherein the determination of the prioritized data rate backoff value is based on at least one of: a mobility status of the apparatus (100, 1400), a battery status of the apparatus (100, 1400), an energy status of the apparatus (100, 1400), or a present or expected energy harvesting rate of the apparatus (100, 1400);
adjusting power consumption of the apparatus (100, 1400) based on the prioritized data rate backoff value;
transmitting, to the network node (104), a response to the message, wherein the response indicates the prioritized data rate backoff value; and
communicating with the network node (104) over the radio link with a data rate indicated by the prioritized data rate backoff value.

15. A system comprising at least a network node (104) and a user equipment (100),
wherein the network node (104) is configured to:

determine a plurality of data rate backoff values for reducing a data rate limit of a radio link between the network node (104) and the user equipment (100) to be less than a maximum achievable data rate of the radio link, while fulfilling one or more quality of service requirements of the user equipment (100);
transmit, to the user equipment (100), a message indicating the plurality of data rate backoff values;
wherein the user equipment (100) is configured to:

receive, from the network node (104), the message indicating the plurality of data rate backoff values;
determine a prioritized data rate backoff value from the plurality of data rate backoff values,
wherein the determination of the prioritized data rate backoff value is based on at least one of: a mobility status of the user equipment (100), a battery status of the user equipment (100), an energy status of the user equipment (100), or a present or expected energy harvesting rate of the user equipment (100);
adjust power consumption of the user equipment (100) based on the prioritized data rate backoff value;
transmit, to the network node (104), a response to the message, wherein the response indicates the prioritized data rate backoff value; and
communicate with the network node (104) over the radio link with a data rate indicated by the prioritized data rate backoff value;
wherein the network node (104) is further configured to:

receive the response from the user equipment (100); and
communicate with the user equipment (100) over the radio link with the data rate indicated by the prioritized data rate backoff value.

FIG. 1

100

UE

104

NW
node

201: RRM procedures

202: Report on PMI/CQI feedback

203: Determine
maximum
achievable data rate

204: Data rate backoff configuration

205: Determine
data rate backoff
value

206: Indicate data rate backoff value

207: Adjust power
consumption

208: Apply
configuration

209: ACK

210: Determine set
of minimum
network resources

211: Activate set of
minimum network
resources

212: Communication

FIG. 2

FIG. 3

FIG. 4

**100**

UE

**104**

NW node

501: RRM procedures

502: Report on PMI/CQI feedback

503: Determine maximum achievable data rate

504: Data rate backoff configuration

505: Determine plurality of data rate backoff values

506: Indicate plurality of data rate backoff values

507: Determine prioritized data rate backoff value

508: Adjust power consumption

509: Apply configuration

510: Prioritized data rate backoff value

511: Determine set of minimum network resources

512: Activate set of minimum network resources

513: Communication

FIG. 5

| 601 | Receive message indicating one or more data rate backoff values |
|---|---|
| 602 | Adjust power consumption |

FIG. 6

| 701 | Receive message indicating a plurality of data rate backoff values |

702 Handover?

703 Select maximum data rate backoff value — Yes

No

704 Low energy or battery status?

705 Select a high data rate backoff value — Yes

No

706 High energy or battery status?

707 Select a lower data rate backoff value — Yes

No

708 High priority data?

709 Select no data rate backoff value — Yes

No

710 Select data rate backoff value preferred by network

FIG. 7

| 801 | Determine one or more data rate backoff values |
|---|---|
| 802 | Transmit message indicating the one or more data rate backoff values |

FIG. 8

| 901 | Perform RRM procedures |
|---|---|
| 902 | Determine maximum achievable data rate |
| 903 | Determine one or more data rate backoff values |
| 904 | Transmit message indicating the one or more data rate backoff values |
| 905 | Determine set of minimum resources |
| 906 | Activate the set of minimum resources |
| 907 | Communicate with UE |

FIG. 9

UE QoS requirements
UE DTX/DRX cycle
UE class and category
Max supported link rate

**1001**
Determine one or more data rate backoff values

**1002**
Select data rate backoff value, OR transmit plurality of data rate backoff values and receive prioritized data rate backoff value from UE

Selected data rate backoff value

**1003**
Determine set of minimum network resources

Set of minimum network resources

Reference parameters

FIG. 10

FIG. 11

FIG. 12

FIG. 13

1400

FIG. 14

1500

FIG. 15

Europäisches
Patentamt

European
Patent Office

Office européen
des brevets

# EUROPEAN SEARCH REPORT

**Application Number**

EP 25 19 9612

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/072252 A1 (GOOGLE LLC [US]) 9 April 2020 (2020-04-09) | 1-3,5-15 | INV. H04W28/24 |
| Y | * paragraphs [0003], [0011] - [0013], [0016], [0030] - [0034], [0037] - [0041], [0051] * * figure 1 * * claims 3, 4 * | 4 | ADD. H04W28/02 H04W28/22 |
| Y | US 2024/080762 A1 (BOETTGER DAVID [US]) 7 March 2024 (2024-03-07) | 4 | |
| A | * paragraphs [0026], [0029], [0051], [0056], [0072], [0081] - [0082] * | 1-3,5-15 | |

-----

-----

**TECHNICAL FIELDS SEARCHED (IPC)**

H04W
H04L

The present search report has been drawn up for all claims

| Place of search | Date of completion of the search | Examiner |
|---|---|---|
| The Hague | 19 January 2026 | Metozounve, Emeline |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 9612

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2026

| Patent document cited in search report | Publication date | Patent family member(s) | Publication date |
|---|---|---|---|
| WO 2020072252 A1 | 09-04-2020 | US 2020107228 A1<br>WO 2020072252 A1 | 02-04-2020<br>09-04-2020 |
| US 2024080762 A1 | 07-03-2024 | NONE | |

EPO FORM P0459

For more details about this annex : see Official Journal of the European Patent Office, No. 12/82